# FASCICULE DE BREVET EUROPEEN

(11) **EP 2 721 190 B1**
(45) Date de publication et mention de la délivrance du brevet: **24.02.2016**
(21) Numéro de dépôt: 12731580.2
(22) Date de dépôt: 18.06.2012
(51) Int. Cl.: C23C 8/02, C23C 8/32, C23C 8/38, C21D 7/06, B82Y 30/00, B82Y 40/00

(54) **TRAITEMENT DE SURFACE D'UNE PIECE METALLIQUE**
OBERFLÄCHENBEHANDLUNG EINES METALLTEILS
SURFACE TREATMENT OF A METAL PART

(30) Priorité: 17.06.2011 FR 1155358
(43) Date de publication de la demande: 23.04.2014
(73) Titulaire: Winoa, 38570 Le Cheylas (FR)
(72) Inventeur: PREZEAU, Tony, F - 38320 Poisat (FR); MULLER, Teddy, F - 74330 Poisy (FR); BARON, Michel, F-69340 Francheville (FR); SAMUEL, Joan, F-38530 Pontcharra (FR); DRANSART, Emmanuel, F-42660 Saint Romain Les Atheux (FR)
(74) Mandataire: Loyer & Abello
(86) Numéro de dépôt international: PCT/FR2012/051359
(87) Numéro de publication internationale: WO 2012/172270

(56) Documents cités:
- WO-A1-02/10462
- CN-A- 101 549 480
- CN-A- 101 580 940
- BAGHERI S ET AL: "Review of shot peening processes to obtain nanocrystalline surfaces in metal alloys", SURFACE ENGINEERING, INSTITUT OF MATERIALS, LONDON, GB, vol. 25, no. 1, 1 janvier 2009 (2009-01-01), pages 3-14, XP009155383, ISSN: 0267-0844

## Description

L'invention se rapporte au domaine du traitement des surfaces métalliques, en particulier au traitement par grenaillage, combiné à des traitements thermochimiques.

Le grenaillage de précontrainte est une technique largement utilisée pour améliorer certaines propriétés des surfaces métalliques, comme la tenue en fatigue. Un traitement de grenaillage de précontrainte est typiquement caractérisé par un taux de recouvrement qualifiant la proportion de la surface impactée par le grenaillage et une intensité qualifiant la quantité d'énergie cinétique appliquée par unité de surface. La littérature dans le domaine du grenaillage de précontrainte prescrit des limites des paramètres taux de recouvrement et intensité, au-delà desquelles le matériau grenaillé encourt des dégradations telles que fissuration et réduction de la tenue en fatigue. Les conditions donnant lieu à ces dégradations sont couramment désignées par le terme « overpeening ».

Des recherches ultérieures sur les traitements par grenaillage ont mis en évidence la possibilité de produire une nanostructuration de la matière au niveau d'une couche surfacique en poussant le traitement de grenaillage au-delà des limites normalement prescrites. Par nanostructuration, on désigne l'obtention d'une phase stable dont la taille de grain est de l'ordre de quelques dizaines de nanomètres. Dans certaines conditions, il est supposé que la nanostructuration de la matière empêche la propagation des microfissures, de sorte que les dégradations prédites ne se produisent pas.

La nanostructuration de la matière produit des effets avantageux tels que l'augmentation de la tenue en fatigue, de la dureté, de la résistance à la corrosion, de la diffusivité atomique, de la biocompatibilité, l'amélioration des propriétés tribologiques et autres.

Parmi les procédés connus pour produire une couche surfacique nanostructurée, on peut relever essentiellement :
- des techniques de projection de particules fines ou très fines à haute ou très haute vitesse (Fine Particle Bombarding ou Air Blast Shot Peening) en incidence normale sur l'échantillon à traiter. Ces techniques sont notamment présentées dans la publication du Iron and Steel Institute of Japan ISU International, Vol. 47 (2007), No. 1, pp 157-162.
- des techniques de mise en vibration de particules plus grosses à plus faibles vitesses, dénommées UltraSonic Shot Peening ou Surface Mechanical Attrition Treatment. Ces techniques sont notamment présentées dans la publication du Japan Institute of Metals Materials Transactions, Vol. 45, No. 2 (2004), pp 376-379.
WO02/10461 décrit un procédé de génération de nanostructures à la surface d'une pièce métallique dans lequel des billes parfaitement sphériques semblables à des billes de roulements à billes sont projetées sur un point d'impact de la pièce sous des incidences variables. Pour obtenir une épaisseur de nanostructures de quelques dizaines à plusieurs centaines de microns, il est enseigné de mettre sous contrainte mécanique et/ou thermique la surface de la pièce métallique à traiter.

Le document CN101580940A décrit une méthode de traitement de moule pour pneu. La méthode comporte une étape de traitement par nano cristallisation. L'étape de nano cristallisation est réalisée à l'aide d'un outil de grenaillage oscillant continuellement.

WO 02/10462 décrit un procédé de génération de nanostructures dans lequel des billes sont projetées sur un point d'impact d'une pièce selon des directions d'incidence différentes et variées par une source de projection de bille pour créer des déformations ayant un sens quelconque. Le procédé comprend en outre une étape de traitement chimique de la couche nanostructurée à des températures de 550°C et 350°C.

L'invention fournit un procédé de traitement de surface d'une pièce métallique en acier, comportant :
exposer une surface de la pièce métallique à un flux de particules sensiblement sphériques, de manière que toute portion de ladite surface reçoive lesdites particules selon plusieurs incidences primaires, les incidences primaires des particules sur une portion de la surface étant essentiellement distribuées dans un cône ou une pellicule conique qui présente un demi-angle externe au sommet compris entre 10° et 45°, jusqu'à l'obtention d'une couche surfacique de nanostructures, par exemple une couche présentant une épaisseur moyenne supérieure à 40 ou 50 µm,
les particules présentant un diamètre inférieur à 2 mm et supérieur à 0,1 mm et étant projetées à une vitesse comprise entre 40 m/s et 100 m/s ; et
exposer la surface de la pièce métallique à des conditions thermochimiques entrainant la diffusion d'un corps dans la structure métallique de la pièce pour modifier la composition chimique de la pièce métallique sur au moins une partie de son épaisseur à partir de la surface, les conditions thermochimiques étant des conditions de carbonitruration à basse pression à une température comprise entre 750°C et 1100°C entrainant une recristallisation de la couche surfacique de nanostructures et une diffusion d'azote dans les joints de grain de l'acier de la couche surfacique recristallisée, le procédé produisant la formation de particules de carbonitrures finement dispersées dans la couche surfacique recristallisée..

Une idée à la base de l'invention est de créer un ou plusieurs flux de particules aptes à frapper une surface à traiter selon des incidences variées et contrôlées pour solliciter un grand nombre de plans de glissement atomiques de la matière. Selon un mode de réalisation, la couche surfacique de nanostructures présente une épaisseur moyenne supérieure à 40 ou 50 µm, la limite de la couche surfacique de nanostructures étant déterminée comme une zone de la pièce métallique où la dureté est supérieure à un seuil dépendant de la matière métallique dont est faite la pièce.

Selon un mode de réalisation, ledit seuil de dureté est défini par un durcissement de la matière par rapport à un état antérieur au traitement de surface qui est égal à 50% du durcissement obtenu au niveau de la surface traitée de la pièce métallique. Dans d'autres cas ce seuil peut être défini en fonction d'autres paramètres, notamment la position d'une transition de phase cristalline dans la matière lorsqu'une telle transition a lieu.

Selon d'autres modes de réalisation avantageux, un tel procédé peut présenter une ou plusieurs des caractéristiques suivantes.

Selon un mode de réalisation, les particules présentent un diamètre supérieur à 0,3 mm et inférieur à 1,4 mm.

Selon un mode de réalisation, les incidences des particules sont distribuées sensiblement continûment dans le cône ou la pellicule conique.

Selon un mode de réalisation, le cône ou la pellicule conique présente un demi-angle externe au sommet compris entre 10° et 30°.

Selon un mode de réalisation, le flux de particules comporte un jet de particules projeté selon une direction centrale, la pièce métallique étant fixée sur un support de manière à présenter ladite surface orientée de manière oblique par rapport à ladite direction centrale, le support étant mis en rotation autour d'un axe coaxial avec la direction centrale du jet de particules. Selon un mode de réalisation, l'inclinaison de la surface de la pièce par rapport à la direction centrale est comprise entre 10° et 30°, de préférence voisine de 15°.

Selon un mode de réalisation, les particules sont projetées à une vitesse comprise entre 50 et 80 m/s.

Selon un mode de réalisation, les particules présentent une dureté supérieure à la dureté de la surface de la pièce avant traitement.

Selon un mode de réalisation, l'invention fournit aussi une pièce métallique comportant une surface traitée par le procédé précité, ladite surface comportant une couche surfacique de nanostructures présentant une épaisseur moyenne supérieure à 40 ou 50 µm, la limite de la couche surfacique de nanostructures étant déterminée comme une zone de la pièce métallique où la dureté est supérieure à un seuil dépendant de la matière métallique dont est faite la pièce.

Selon un mode de réalisation, ledit seuil de dureté est défini par un durcissement de la matière par rapport à un état antérieur au traitement de surface qui est égal à 50% du durcissement obtenu au niveau de la surface traitée de la pièce métallique.

Selon un mode de réalisation, la couche surfacique de nanostructures présente une épaisseur moyenne supérieure à 100 µm.

Selon un mode de réalisation, l'invention fournit aussi un dispositif de traitement de surface pour une pièce métallique, comportant :
un moyen de projection apte à produire un flux de particules sensiblement sphériques présentant un diamètre inférieur à 2 mm et supérieur à 0,1 mm et projetées à une vitesse comprise entre 40 m/s et 100 m/s,
un support apte à retenir une pièce métallique, le support comportant une surface exposée au flux de particules, et
un actionneur apte à modifier une orientation du support par rapport au flux de particules de manière que les incidences primaires des particules sur une surface du support soient essentiellement distribuées dans un cône ou une pellicule conique qui présente un demi-angle externe au sommet compris entre 10° et 45°.

Selon un mode de réalisation, le moyen de projection est apte à produire un jet de particules projeté selon une direction centrale, la surface du support étant orientée de manière oblique par rapport à ladite direction centrale, l'actionneur étant apte à faire pivoter le support autour d'un axe coaxial avec la direction centrale du jet de particules.

Les traitements de grenaillage ci-dessus sont suivis de procédés thermochimiques. On expose la surface de la pièce métallique à des conditions thermochimiques entrainant la diffusion d'un corps dans la structure métallique de la pièce pour modifier la composition chimique de la pièce métallique sur au moins une partie de son épaisseur à partir de la surface.

On a constaté que dans les procédés de grenaillage ci-dessus, on pouvait obtenir une densité élevée de joints de grains débouchant à la surface de la pièce. Grâce à la nanostructuration de la matière préalablement obtenue, des traitements de diffusion sont ainsi susceptibles d'enrichir la structure métallique avec des éléments diffusés plus rapidement et/ou sur une plus grande profondeur et/ou à une température plus basse que dans une pièce sans nanostructuration surfacique. Un tel traitement thermochimique peut affecter en premier lieu la couche nanostructurée, mais pas seulement. En effet, la zone nanostructurée est susceptible de fournir des canaux d'entrée particulièrement efficaces pour affecter également le métal sous-jacent.

Selon un mode de réalisation, la pièce métallique est composée d'un acier inoxydable austénitique ou d'un acier structural, et la surface est exposée au flux de particules avec un taux de recouvrement de 1000 à 2000%.

Selon un mode de réalisation, la pièce métallique est composée d'un acier à outils et la surface est exposée au flux de particules jusqu'à obtenir un couche nanostructurée épaisse d'au moins 40 µm, par exemple en effectuant le grenaillage avec un taux de recouvrement supérieur à 3000%.

Selon un mode de réalisation, l'étape d'exposition de la pièce métallique aux conditions thermochimiques comporte :
soumettre la pièce métallique à une montée en température progressive jusqu'à ladite température de carbonitruration et
maintenir la température à ladite température de carbonitruration, la durée cumulée de la montée en température et du maintien en température étant inférieure à trois heures.

Selon un mode de réalisation, la durée cumulée est comprise entre 0.5 et 1.5 heure.

Selon un mode de réalisation, la surface est exposée au flux de particules avec un taux de recouvrement compris entre 400 et 1000%.

De manière similaire, d'autres traitements thermochimiques entrainent la formation de précipités ayant une autre nature chimique, en fonction des éléments diffusés. Dans tous les cas, la nanostructuration préalable de la matière favorise la structuration de ces précipités sous une forme fine et dispersée et inhibe la formation de précipités sous une forme grossière ou d'un réseau continu fragilisant.

Certains aspects de l'invention partent de l'idée de concevoir un procédé de nanostructuration de la matière qui présente une productivité élevée pour produire des couches surfaciques nanostructurées relativement épaisses dans un temps relativement court. Certains aspects de l'invention partent de l'idée de produire des couches surfaciques nanostructurées relativement homogènes. Certains aspects de l'invention partent de l'idée de concevoir un procédé de nanostructuration de la matière qui soit applicable à des géométries variées, en particulier des formes concaves. Certains aspects de l'invention partent de l'idée de concevoir un procédé de nanostructuration de la matière qui soit relativement facile et économique à mettre en oeuvre.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- La figure 1 est une représentation schématique d'un procédé de nanostructuration d'une surface métallique.
- La figure 2 est une vue schématique en perspective d'une machine de grenaillage convenant pour mettre en oeuvre des procédés selon des modes de réalisation de l'invention.
- La figure 3 est une représentation schématique d'un jet de particule produit par la machine de la figure 2.
- La figure 4 est un schéma de fonctionnement de la machine de la figure 2.
- La figure 5 est un graphique représentant l'évolution de la dureté d'une pièce métallique en fonction de la profondeur sous la surface traitée, pour plusieurs conditions de grenaillage.
- La figure 6 est un graphique représentant l'évolution de l'épaisseur d'une couche surfacique nanostructurée en fonction du taux de recouvrement pour les conditions de grenaillage de la figure 5.
- La figure 7 est un graphique représentant l'évolution du temps de traitement en fonction du taux de recouvrement pour plusieurs tailles de grenailles.
- La figure 8 est un graphique représentant l'évolution de la dureté surfacique et de l'épaisseur d'une couche surfacique nanostructurée en fonction du taux de recouvrement pour une condition de grenaillage
- La figure 9 est un graphique représentant l'évolution de l'épaisseur d'une couche surfacique nanostructurée en fonction du taux de recouvrement pour différents modes de fixation de la pièce traitée.
- La figure 10 est un graphique représentant l'évolution de l'épaisseur d'une couche surfacique nanostructurée en fonction de l'inclinaison d'un support dans la machine de la figure 2, pour plusieurs conditions de grenaillage.
- La figure 11 est un graphique représentant l'évolution de la dureté de pièces en différents matériaux métalliques en fonction de la profondeur sous la surface traitée.
- La figure 12 est un graphique représentant l'évolution de l'épaisseur d'une couche surfacique nanostructurée en fonction du taux de recouvrement pour différents matériaux métalliques.
- Les figures 13 et 14 sont des graphiques représentant l'évolution de la dureté surfacique et de l'épaisseur d'une couche surfacique nanostructurée en fonction du taux de recouvrement pour deux vitesses de projection différentes.
- La figure 15 est un graphique représentant l'évolution de la dureté surfacique et de l'épaisseur d'une couche surfacique nanostructurée en fonction du taux de recouvrement pour une autre condition de grenaillage.
- La figure 16 est une représentation schématique en coupe d'une pièce traitée par un procédé de grenaillage représentant la zone d'influence d'un impact.
- Les figures 17 à 20 sont des photographies en microscopie optique de couches surfaciques nanostructurées.
- La figure 21 est un graphique représentant le profil de diffusion du carbone et de l'azote dans une pièce traitée par un procédé de nitruration sans grenaillage préalable.
- La figure 22 est un graphique représentant le profil de diffusion du carbone et de l'azote dans une pièce traitée successivement par un procédé de grenaillage et le procédé de nitruration de la figure 21.
- La figure 23 est un graphique représentant le profil des contraintes résiduelles respectivement dans une pièce traitée successivement par un procédé de nanostructuration, de nitruration et un grenaillage de pré-contrainte et dans une pièce traitée seulement par le procédé de nitruration et de grenaillage de pré-contrainte.
- La figure 24 est un graphique représentant le profil de la dureté Vickers respectivement dans une pièce traitée successivement par un procédé de grenaillage et un procédé de carbonitruration basse pression et dans une pièce traitée seulement par le procédé de carbonitruration basse pression.
- Les figures 25 et 26 sont des images de microscopie électronique montrant la section d'un échantillon d'acier structural 32CrMoV13 à proximité de sa surface, pour un traitement de nitruration gazeuse à 520 °C sans et avec nanostructuration préalable.
- Les figures 27 et 28 sont des images de microscopie optique montrant la section d'un échantillon d'acier à outils X38CrMoV5 à proximité de sa surface, pour un traitement de nitruration gazeuse à 520 °C sans et avec nanostructuration préalable.
- Les figures 29 et 30 sont des images de microscopie optique montrant la section d'un échantillon d'acier 23MnCrMo5 à proximité de sa surface, pour un traitement de carbonitruration à basse pression sans et avec nanostructuration préalable.
- La figure 31 est un graphique représentant l'évolution de la dureté d'une pièce métallique en fonction de la profondeur sous la surface traitée, pour plusieurs conditions de grenaillage avec une autre méthode de mesure de dureté.
- La figure 32 est une représentation schématique en coupe d'une pièce métallique présentant une couche surfacique nanostructurée en fonction de la profondeur sous la surface traitée sur laquelle est superposée la courbe de dureté mesurée.
- La figure 33 est un graphique représentant l'évolution de la dureté surfacique d'une pièce traitée par grenaillage et l'évolution de l'épaisseur d'une couche surfacique nanostructurée en fonction du taux de recouvrement.
- La figure 34 est un graphique représentant l'évolution de température en fonction du temps lors d'une simulation de montée en température en 30 minutes jusqu'aù niveau haut d'un traitement de carbonitruration (environ 900°C).
- La figure 35 est un graphique représentant l'évolution de température en fonction du temps lors d'une simulation de montée en température du même type que la figure 34 mais avec une durée de 1h30.
- La figure 36 est un graphique représentant l'évolution de température en fonction du temps lors d'une simulation de montée en température du même type que la figure 34 mais avec une durée de 3 heures.

On décrit ci-dessous des modes de réalisation de procédés de grenaillage permettant d'obtenir une couche surfacique nanostructurée sur une pièce métallique. Sauf indication contraire, les résultats expérimentaux présentés ci-dessous sont obtenus avec des échantillons métalliques plans.

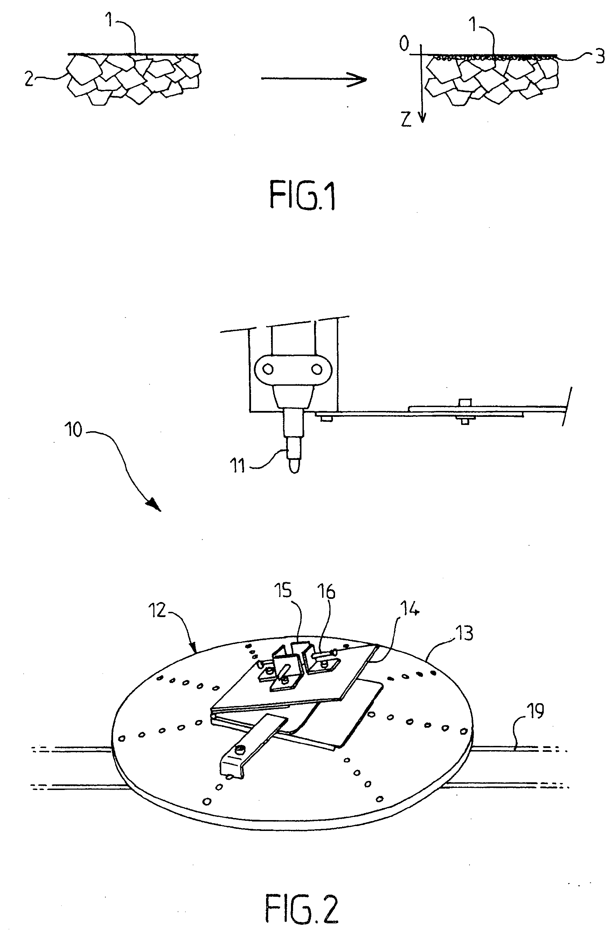

En référence à la figure 1, un procédé de nanostructuration d'une surface métallique 1 est schématiquement représenté. Sur la vue de gauche, avant traitement, la taille des grains 2 de la matière jusqu'à la surface 1 est typiquement de quelques dizaines à quelques centaines de µm. Sur la vue de droite, après traitement, la taille de grain de la matière au niveau d'une couche surfacique 3 est réduite à quelques dizaines de nm, par exemple environ 20 nm, tandis que des grains de plus grosse taille continuent d'exister plus profondément dans le matériau. Pour la suite, on définit un axe z perpendiculaire à la surface 1 et orienté vers l'intérieur de la matière à partir de la surface. La surface sert de référence des cotes. La transition de taille des grains entre la couche surfacique 3 et la matière profonde non modifiée est en réalité plus progressive que sur le dessin.

La nanostructuration de la matière dans la couche 3 est stable jusqu'à une température d'au moins 600°C. Une pièce métallique revêtue d'une telle couche nanostructurée peut être employée dans diverses industries, par exemple dans des applications où la résistance à l'usure et à la fatigue sont des propriétés critiques.

En référence à la figure 2, on décrit maintenant une machine de grenaillage 10 pouvant être employée pour produire une telle couche nanostructurée.

La machine 10 comporte une buse de projection 11 alimentée à partir d'un réservoir de grenaille et d'un compresseur d'air (non représentés) pour produire un jet de grenaille projeté à une vitesse V pouvant varier selon la taille des particules de grenaille. En variante, la projection de particules de grenaille peut aussi être effectuée à l'aide d'une turbine à palettes, selon la technique connue. Des équipements de grenaillage courants permettent d'obtenir des vitesses allant de 20 m/s à environ 120 m/s.

La grenaille employée est préférablement constituée de particules obtenues par atomisation. De telles particules peuvent être produites en quantité élevée à un coût relativement avantageux et présentent une assez bonne sphéricité, par exemple supérieure ou égale à 85%. Leur coût est nettement inférieur à celui des billes de roulement à bille dont le procédé de fabrication est quasiment unitaire pour atteindre une sphéricité supérieure à 99%. Alternativement, d'autres médias classiques de grenaillage peuvent être utilisés, tels que le fil coupé rodé, les billes de verre ou les billes de céramique.

La buse de projection 11 est fixée face à un dispositif de support mobile 12 construit de la manière suivante : un disque métallique 13 est monté sur l'arbre d'un moteur rotatif non représenté, par exemple électrique, pour pouvoir pivoter par rapport un cadre fixe 19. L'axe central de pivotement du disque 13 est coaxial avec un axe central de projection de la buse 11. Sur le disque 13 est disposé un support inclinable 14 dont un angle d'inclinaison par rapport au disque 13 est réglable au moyen d'une vis. Autour d'une partie centrale du support inclinable 14 sont fixée des brides de fixation 15 munies de vis 16 parallèles au support 14. Les vis 16 peuvent être serrées sur une pièce à traiter pour fixer la pièce entre les brides 15 et peuvent être desserrées pour retirer la pièce après traitement.

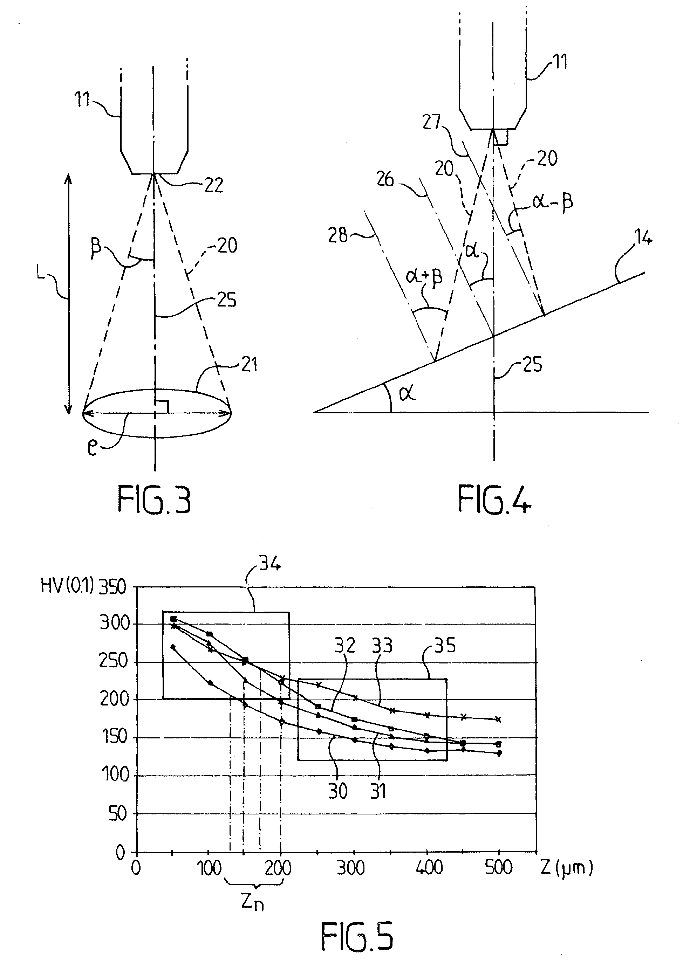

En référence à la figure 3, on a représenté schématiquement un jet de particules 20 produit par la buse de projection 11. Le jet 20 présente une forme approximativement conique avec un demi-angle au sommet β. L'angle β peut être mesuré par exemple comme le rapport entre le rayon ρ d'une zone impactée 21 et la distance L de la zone 21 à l'orifice 22 de la buse 11. En référence à la figure 4, on décrit maintenant le principe de fonctionnement de la machine de grenaillage 10. Pour un échantillon plan parallèle au support 14, la partie de surface située sur l'axe central 25 du jet 20 reçoit les particules selon un angle d'incidence α par rapport à la direction normale locale 26. La partie de surface située sur un bord du jet 20 reçoit les particules selon un angle d'incidence (α-β) par rapport à la direction normale locale 27. La partie de surface située sur le bord opposé du jet 20 reçoit les particules selon un angle d'incidence (α+β) par rapport à la direction normale locale 28.

Lorsque le dispositif de support 12 tourne au cours de la projection des particules, toute partie de l'échantillon située dans le jet 20 est frappée selon des incidences situées dans une pellicule conique plus ou moins large. Cette pellicule conique est fine vers le centre du jet où elle coïncide exactement avec l'angle α et plus large vers la périphérie du jet, où elle inclut tous les angles compris entre (α-β) et (α+β). Si β ≥ α, la pellicule conique dégénère en un cône. Au cours de la rotation du dispositif de support 12, une zone de la surface traitée peut être frappée selon toutes les valeurs d'angle de site situées dans la pellicule conique. Cette propriété de la machine 10 permet de produire des couches nanostructurées sur différents métaux avec une productivité relativement élevée, comme il va être relaté dans les essais ci-dessous. Dans les essais ci-dessous, l'angle β vaut environ 8° et la distance L environ 300 mm. Bien sûr, il n'est pas exclu qu'une petite portion des particules soient projetées selon des trajectoires atypiques en dehors des directions principales du jet 20.

Les essais qui vont être décrits ci-dessous ont été réalisés avec différents types de grenaille, dont les principales propriétés sont mentionnées dans le tableau 1 selon la norme SAE J444. Le diamètre nominal d'un type de grenaille est défini comme le diamètre médian de la distribution : 50% en masse des particules du type de grenaille considéré ont un diamètre inférieur au diamètre nominal, et 50% ont un diamètre supérieur.

**Tableau 1 : propriétés des grenailles selon la norme SAE J444**

| Type de grenaille | Diamètre Nominal (D) | Distribution (fraction des particules de plus grande taille que) | | | | | | | | | | | | | |
|---|---|---|---|---|---|---|---|---|---|---|---|---|---|---|---|
| S550 | 1.40 | 0 | | >85 | >96 | | | | | | | | | | |
| S330 | 0.85 | | | 0 | <5 | | >85 | >96 | | | | | | | |
| S280 | 0.71 | | | | 0 | <5 | | >85 | >96 | | | | | | |
| S170 | 0.425 | | | | | | 0 | <10 | | | >85 | >97 | | | |
| S070 | 0.18 | | | | | | | | | | 0 | <10 | | >80 | >90 |
| | mm | 2.00 | 1.70 | 1.40 | 1.18 | 1.00 | 0.85 | 0.71 | 0.60 | 0.50 | .425 | 0.35 | 0.30 | 0.18 | 125 |

### Essai 1

Le tableau 2 relate les résultats d'un premier essai réalisé avec la machine 10 sur des échantillons plans d'acier E24 (acier faiblement allié : 0.2% C, 1.5%Mn, 98.2% Fe) fixés par serrage sur le support 14 avec une inclinaison α = 15°. Dans ce tableau sont consignés le type de grenaille utilisé dans l'essai, la vitesse de projection V, le taux de recouvrement R, l'épaisseur de la couche nanostructurée zₙ obtenue, la dureté Vickers de l'échantillon sur sa face exposée au grenaillage, la dureté Vickers de l'échantillon sur sa face opposée, et le rapport entre les deux duretés dénommé gain dureté.

Le taux de recouvrement R est une mesure de la proportion de la surface impactée par le grenaillage. Dans la présente description, il est défini comme suit : la référence 100% indique qu'une quantité de grenaille statistiquement suffisante pour impacter 98% de la surface exposée a été projetée. Au-delà de 100%, une loi linéaire est appliquée par rapport à cette quantité de référence. Un taux de recouvrement de 1000% indique donc qu'on a projeté 10 fois la quantité de référence. A débit constant, le taux de recouvrement est donc aussi une mesure du temps de traitement de l'échantillon.

L'épaisseur de la couche nanostructurée zn a été obtenue par deux méthodes : une observation par microscopie optique et une observation du profil de dureté de la matière en fonction de la profondeur z.

Par microscopie optique, l'épaisseur mesurée est une moyenne arithmétique de 9 observations de l'épaisseur de la couche visuellement amorphe correspondant à la zone nanostructurée 3. La largeur de l'échantillon traitée est balayée sur trois zones et 3 mesures sont prises par zone, ce qui assure de la reproductibilité de la méthode de mesure.

Les observations microscopiques sont ensuite corrélées à des profils de dureté, pour confirmer que la zone visuellement amorphe observée correspond bien au pic de dureté provenant du durcissement par l'effet des grains nanométriques.

La méthode utilisée pour réaliser le profil de dureté consiste à effectuer une ligne d'indentation avec un pas de 50 µm à partir de l'extrême surface avec un microduromètre Vickers à pointe pyramidale avec une charge de 100g (HV 0,1) qui possède un objectif. La surface de l'échantillon et la couche nanostructurée sont visualisées comme en microscopie optique. Le profil de dureté est ainsi obtenu de 50µm à 500µm de profondeur. Les valeurs communiquées sont une moyenne de 3 lignes d'indentations pour avoir une mesure fiable et reproductible.

Le lien entre le profil de dureté et l'épaisseur zₙ peut être expliqué plus précisément l'aide de la figure 5. La figure 5 représente les profils de dureté obtenus par la méthode exposée ci-dessus dans les échantillons de l'essai 1 avec R=3000%. La courbe 30 correspond à la grenaille type S170. La courbe 31 correspond à la grenaille type S280. La courbe 32 correspond à la grenaille type S330. La courbe 33 correspond à la grenaille type S550. Sur toutes les courbes 30 à 33, il apparaît une zone de très haute dureté 34 qui correspond à la couche nanostructurée 3 et une seconde zone 35 où la dureté diminue plus progressivement avec la profondeur et qui correspond à l'écrouissage du matériau. La limite de la couche nanostructurée 3 doit donc correspondre à un fort changement de pente de la dureté. Ce point se vérifie sur la figure 5 où les épaisseurs zₙ obtenues par observation visuelle ont été reportées en trait mixte pour chaque type de grenaille.

Plus précisément, pour les quatre types de grenaille testés sur la figure 5, la limite de la couche nanostructurée 3 observée visuellement correspond sensiblement à la zone dans laquelle la dureté est égale à la valeur médiane entre la valeur de dureté en surface, qui est ici représentée par le premier point de mesure à 50µm de profondeur, et la valeur de dureté loin de la surface, là où la matière n'a pas été affectée substantiellement par le grenaillage, qui est représentée par le dernier point de mesure à 500µm.

Une définition quantitative de la couche nanostructurée 3 peut donc être fournie en fonction de la courbe de dureté : la couche nanostructurée 3 est la zone dans laquelle le durcissement de la matière produit par le traitement de grenaillage est supérieur ou égal à 50% du durcissement maximal obtenu à la surface de l'échantillon. Cette définition empirique a été vérifiée expérimentalement pour les taux de recouvrement supérieurs à 750%, comme il sera expliqué plus bas.

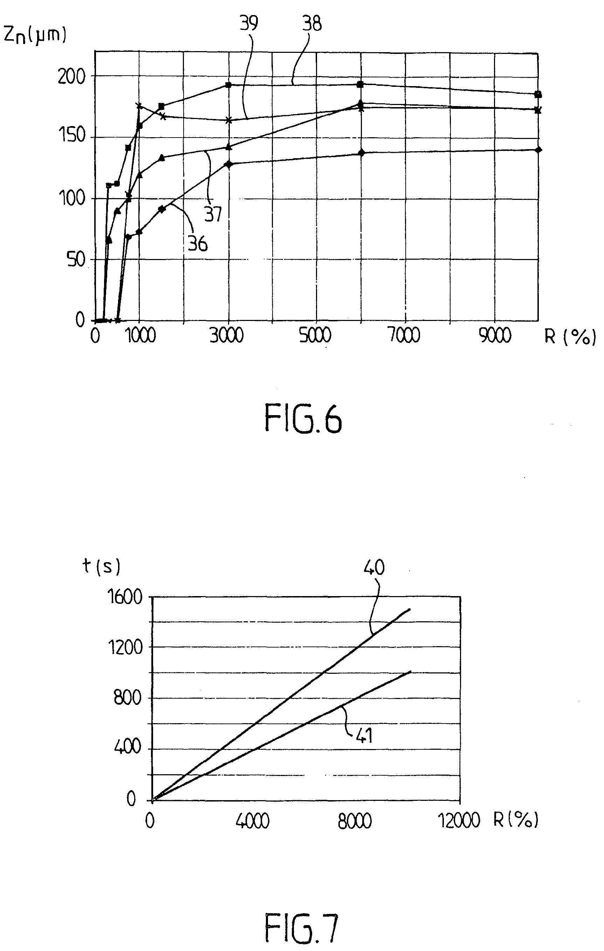

La figure 6 représente l'évolution de l'épaisseur zₙ observée visuellement en fonction de la durée du traitement de grenaillage, mesurée par le taux de recouvrement R, par les quatre types de grenaille. La courbe 36 correspond à la grenaille type S170. La courbe 37 correspond à la grenaille type S280. La courbe 38 correspond à la grenaille type S330. La courbe 39 correspond à la grenaille type S550. Les courbes 36 à 39 mettent en évidence un seuil d'apparition de la couche nanostructurée 3 et un seuil de saturation de son épaisseur. En particulier, il est visible que l'épaisseur n'évolue plus de manière significative au-delà du seuil R=3000% dans le cadre de l'essai 1.

La figure 6 met en évidence que toutes les grenailles de l'essai 1 permettent d'obtenir une épaisseur zₙ dépassant 100µm, voire 140 µm. Cette figure met aussi en évidence deux avantages des grenailles type S280 et S330 (courbes 37 et 38). D'une part, la couche nanostructurée 3 apparaît significativement à un plus faible taux de recouvrement R, autour de 300%, qu'avec les particules plus grosses (S550) ou plus petites (S170). D'autre part, l'épaisseur zₙ culmine à un niveau supérieur à celui obtenu avec particules plus grosses (S550) ou plus petites (S170).

Il peut être considéré surprenant de ne pas obtenir une épaisseur zₙ maximale avec les particules les plus grosses (S550, courbe 39). Cette observation peut toutefois être expliquée par l'effet de compétition qui existe, lorsque la taille des projectiles augmente, entre d'une part l'augmentation de l'énergie cinétique par particule, qui implique une déformation plastique de la matière plus profonde et plus intense à chaque impact de particule, et d'autre part l'augmentation de l'espacement moyen entre les impacts, qui implique une répartition spatiale moins régulière des impacts.

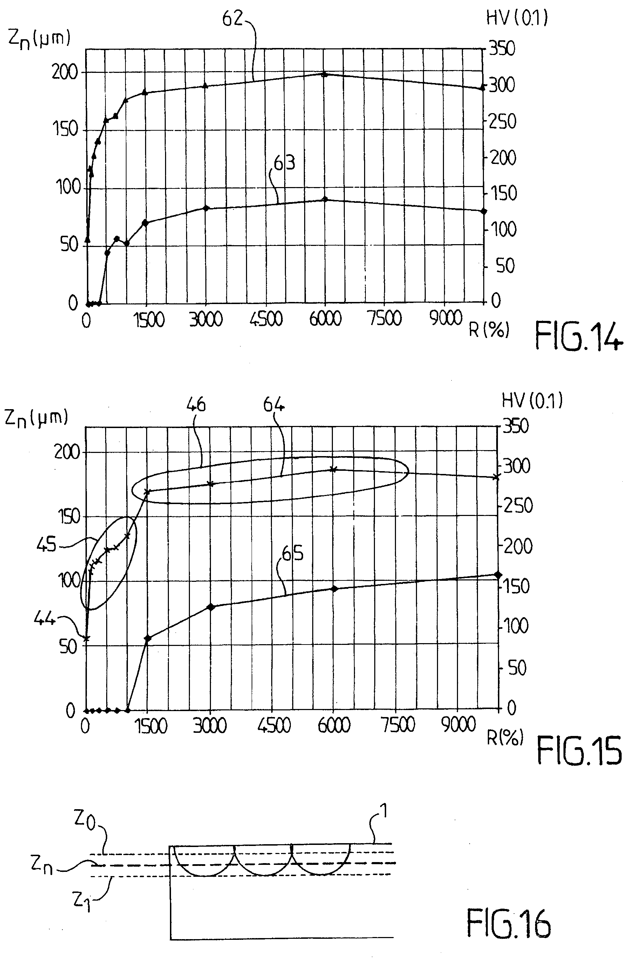

Cette compétition est illustrée schématiquement sur la figure 16, où la zone d'influence d'un impact, aussi appelée lobe de nanocristallisation, est représentée par une demie sphère. Alors que des impacts rapprochés produisent une épaisseur zₙ relativement uniforme sur toute la surface traitée, des impacts relativement espacés donnent lieu à des zones de bord où la matière est déformée sur une relativement faible épaisseur z₀ et des zones centrales où la matière est déformée sur une relativement forte épaisseur z₁. L'épaisseur zₙ observable se situe entre z₀ et z₁.

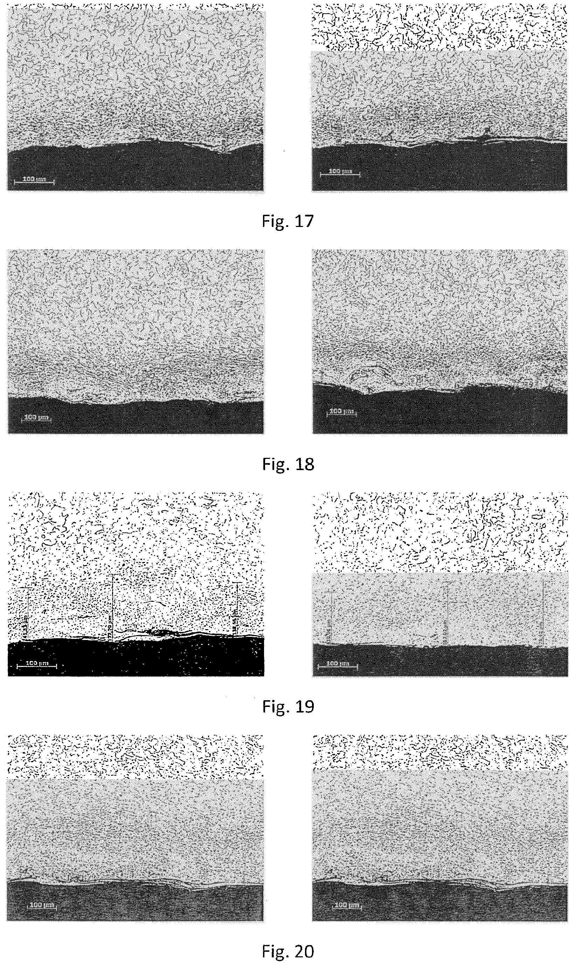

Une autre propriété sur laquelle la taille des particules présente un effet observable est l'uniformité de l'épaisseur zₙ le long de la surface traitée. Cette propriété peut être caractérisée par l'écart type ℓ de l'épaisseur zₙ. Le tableau 3 relate les valeurs mesurées dans des échantillons de l'essai 1 dont des microphotographies sont reproduites aux figures 17 à 19. Pour le taux de recouvrement choisi, il apparait que la plus grosse grenaille type S550 fournit une épaisseur moyenne zₙ comparable à l'épaisseur obtenue avec le type S330, mais un doublement de l'écart type ℓ. Les figures 17 à 19 permettent aussi d'observer des lobes de nanocristallisation.

**Tableau 3 : Ecart type de l'épaisseur nanostructurée dans l'essai 1**

| Fig. | Type de grenaille | Taux de recouvrement R (%) | Dureté Vickers en surface (HV) | Epaisseur nano zₙ (µm) | Ecart type épaisseur nano ℓ (µm) |
|---|---|---|---|---|---|
| 17 | S170 | 1000 | 263 | 72,05 | 11,1 |
| 18 | S280 | 1000 | 290 | 119,7 | 12,5 |
| 19 | S330 | 1000 | 290 | 159,76 | 19,6 |
| 20 | S550 | 1000 | 292 | 175,5 | 40 |

En outre, selon la nature de la buse de projection 11, le temps nécessaire pour obtenir un taux de recouvrement déterminé peut croître avec la taille des particules. La figure 7 représente, pour un modèle de buse conventionnel de grenaillage, l'évolution du taux de recouvrement R avec le temps de projection t pour deux tailles de particules distinctes, toutes conditions égales par ailleurs. La courbe 40 se rapporte au type S550 et la courbe 41 au type S280. Dans l'essai 1, pour former une épaisseur de 100µm, il faut 107s avec le type S550 contre 30s avec le type S330 et 75s avec le type S280. On voit donc que le type de grenaille optimal en termes de productivité, c'est-à-dire produisant la plus forte épaisseur nanostructurée par unité de temps, se situe en-deçà de la granulométrie S550.

L'essai 1 montre donc que des effets contre-productifs des grosses particules commencent à se manifester avec la grenaille de type S550 et qu'il n'est pas avantageux d'utiliser des tailles encore plus grosses.

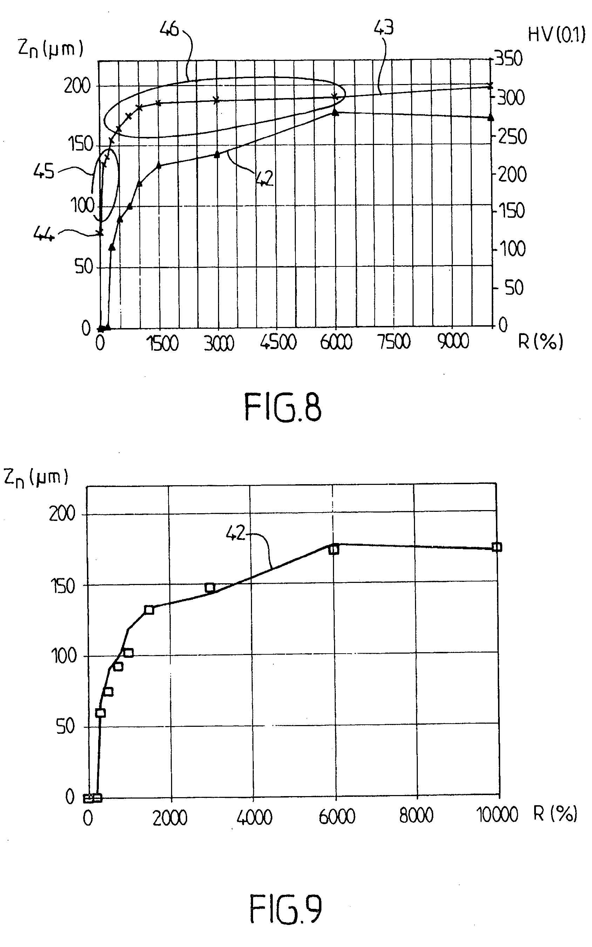

La figure 8 met en évidence la relation entre l'épaisseur nanostructurée zₙ et le durcissement observé à la surface de l'échantillon traité. La courbe 42 représente l'épaisseur zₙ (axe de gauche) et la courbe 43 la dureté Vickers en surface (axe de droite) en fonction du recouvrement R pour le type S280 dans l'essai 1. La courbe 43 met en évidence un effet d'écrouissage qui provoque une première augmentation de dureté dans une zone 45 à partir de la dureté initiale 44 sans pour autant former de grains nanométriques, et un effet de la nanostructuration de la matière qui provoque une deuxième augmentation de la dureté dans une zone 46.

### Essai 2

Pour évaluer l'effet éventuel du bridage de la pièce par les brides de serrage 15 dans l'essai 1, un essai 2 a été effectué avec la grenaille de type S280 dans des conditions similaires à l'essai 1 en collant l'échantillon au support 14 sans lui appliquer aucune contrainte de serrage. La figure 9 montre l'évolution de l'épaisseur zₙ en fonction du recouvrement R dans l'essai 2 (symboles carrés) en superposition avec la courbe 42 de l'essai 1. Il ne ressort aucune différence significative entre les résultats des deux essais, ni dans les mesures d'épaisseur, ni dans les mesures de dureté, ce qui signifie que la fixation de la pièce par bridage dans l'essai 1 n'a pas de relation causale avec les effets de nanostructuration observés.

### Essai 3

Pour évaluer l'effet de l'orientation de la pièce à traiter par rapport au jet de grenaille, un essai 3 a été effectué avec les grenailles de type S170, S280 et S330 dans des conditions similaires à l'essai 1 en faisant varier l'angle α entre 0° et 45° et la rotation du dispositif de support 12. Les épaisseurs nanostructurées obtenues dans cet essai 3 sont consignées dans le tableau 4.

**Tableau 4 : épaisseur nanostructurée dans l'essai 3 pour R = 3000%**

| **Rotation** | **α (°)** | **0** | **15** | **30** | **45** | |
|---|---|---|---|---|---|---|
| Sans | | 0 | 97 | 92 | 72 | **zₙ (µm)** |
| Avec | S170 | 0 | 130 | 102 | 105 | |
| Sans | | 131 | 156 | 134 | 153 | |
| Avec | 5280 | 133 | 189 | 171 | 160 | |
| Sans | | 111 | 168 | 134 | 144 | |
| Avec | S330 | 116 | 236 | 183 | 125 | |

Il est observé pour chaque type de grenaille que l'épaisseur zₙ varie avec l'angle α pour culminer très nettement autour de α = 15°. Il est aussi observé que la mise en rotation du support ne produit aucun effet significatif pour α = 0° mais accroît sensiblement l'épaisseur zₙ lorsque le support est incliné. Ces observations montrent que la production d'impacts des particules selon des incidences variées en tout point de la surface traitée augmente sensiblement la productivité du procédé de nanostructuration. En particulier, ces incidences sont distribuées dans un cône ou une pellicule conique qui présente un demi-angle externe au sommet compris entre environ 10° et 45° dans le cadre de cet essai.

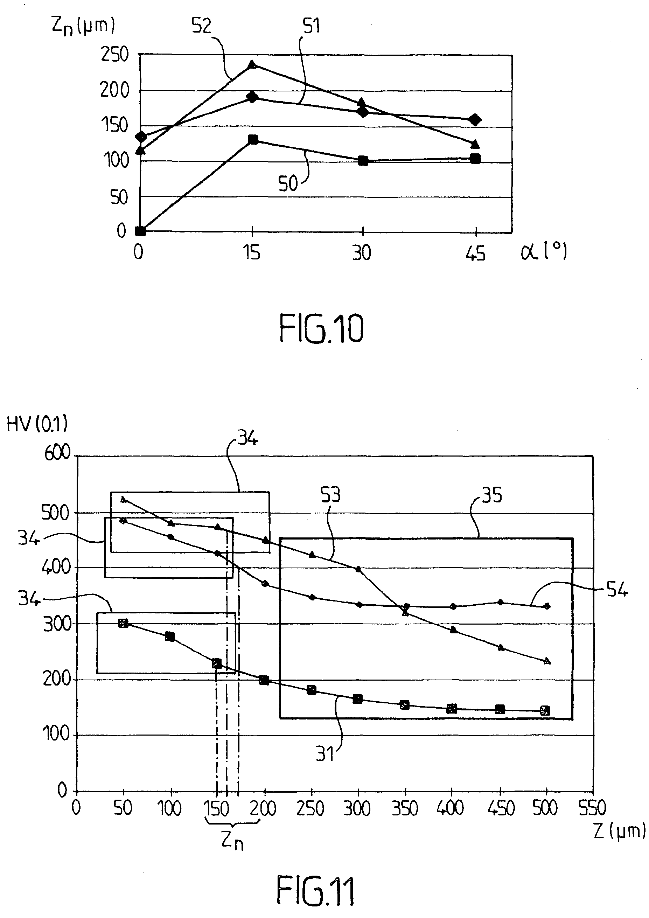

La figure 10 représente graphiquement les résultats du tableau 4 avec rotation du support. La courbe 50 correspond à la grenaille type S170. La courbe 51 correspond à la grenaille type S280. La courbe 52 correspond à la grenaille type S330.

Pour évaluer l'effet de la nature du matériau traité sur le procédé de nanostructuration, d'autres essais ont été effectués avec différents matériaux. En théorie, différents matériaux présentent une réceptivité différente à la déformation plastique sévère et donc aux mécanismes de nanocristallisation. Les processus de raffinement des grains sous une déformation plastique sévère dépendent de nombreux facteurs intrinsèques et extrinsèques, comme la structure et l'énergie de défaut d'empilement (Stacking Fault Energy SFE) du matériau. Plus le matériau présente une énergie SFE élevée, par exemple comme le Fer pur, plus est rendue difficile l'activation des différents plans de glissement et la génération de dislocations nécessaires aux processus de raffinement des grains. La structure cristallographique du métal et la présence éventuelle d'autres éléments comme le carbone ou d'autres éléments d'alliage, notamment sous la forme de précipités favorisant la formation de dislocations, ont donc une influence sur la productivité du procédé de nanostructuration.

### Essai 4

Un essai comparatif a été réalisé avec des échantillons en acier inoxydable 304L et un acier de structure 32CrMoV13 dans des conditions similaires à l'essai 1 avec la grenaille de type S280. La figure 11 illustre les résultats de ces essais en termes de profil de dureté pour R=3000% dans une représentation analogue à la figure 5. La courbe 53 correspond à l'acier inoxydable 304L. La courbe 54 correspond à l'acier de structure 32CrMoV13. Les profils de dureté de ces matériaux correspondent aux tendances observées dans l'essai 1. Les zones 34 et 35 de la figure 11 ont la même signification que dans la figure 5. La courbe 31 de l'essai 1 (acier E24) est reportée à titre de comparaison. Les épaisseurs zₙ observées sont visuellement 143 µm pour E24, 176 µm pour l'acier de structure 32CrMoV13 et 155 µm pour l'acier inoxydable 304L.

On observe encore une fois la validité de la définition quantitative empirique donnée plus haut pour les courbes 54 et 31.

Cette définition correspond bien à la courbe 53 (Acier 304L) lorsque la référence pour le durcissement est choisie à une profondeur de 300µm, Le choix de référence s'explique par le changement de microstructure spécifique à l'acier 304L, lors du grenaillage du matériau, et plus particulièrement lors d'une première étape du grenaillage correspondant à une étape d'écrouissage du matériau.

Lors de la première étape du grenaillage du matériau, une certaine quantité d'austénite de l'acier 304L se transforme en martensite d'écrouissage. Cette transformation en martensite d'écrouissage engendre une augmentation significative de la dureté. Sur la courbe 53, une diminution significative de la dureté est visible entre 300 et 350µm. Cette diminution de la dureté correspond globalement à la zone de transition de phase austénitique et la phase ayant une forte teneur en martensite d'écrouissage. Dans une deuxième étape, la couche nanostructurée 3 apparait dans la phase martensitique. Ainsi, à partir d'une épaisseur supérieure à 350µm, l'échantillon d'acier 304L présente sa dureté d'origine de l'austénite et pour une épaisseur inférieure à 300µm la dureté du matériau est augmentée à la fois par la couche nanostructurée et par la présence de martensite d'écrouissage. Ainsi, la dureté de référence utilisée pour déterminer la couche nanostructurée est la dureté au niveau des couches les plus profondes de la martensite d'écrouissage, qui est ici autour de 300µm.

### Essai 5

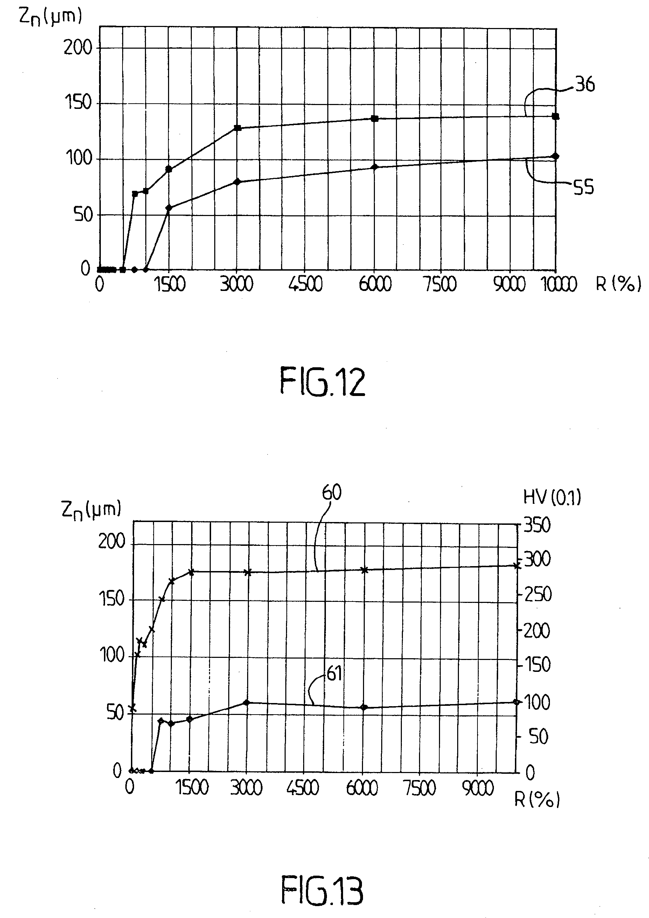

Un essai comparatif a été réalisé avec des échantillons de fer pur à 0,03C (99,8% Fe) dans des conditions similaires à l'essai 1 avec la grenaille de type S170. Le fer pur est présumé être l'un des matériaux les moins favorables au raffinement des grains en raison de sa structure ferritique et de sa haute énergie SFE (environ 200 mJ/m²). La courbe 55 de la figure 12 représente l'épaisseur zₙ résultant de cet essai, observée visuellement, en fonction du taux de recouvrement R. La courbe 36 de l'essai 1 (acier E24) est reportée à titre de comparaison.

Il est ainsi confirmé que l'acier E24 se nanocristallise plus rapidement (apparition de la couche nanostructurée à R=750%) que le fer pur (apparition de la couche nanostructurée à R=1000%) et possède une couche nanostructurée plus épaisse (zₙ=130 µm contre zₙ=100 µm) à saturation. L'essai 5 montre que le procédé permet d'obtenir des couches nanostructurées plus épaisses que 100 µm pour la plupart des matériaux envisageables.

### Essai 6

Pour évaluer l'effet de particules plus petites, des essais ont été effectués avec des échantillons de fer pur à 0,03C (99,8% Fe) et des grenailles de type S070. Les autres conditions sont similaires à l'essai 1.

La figure 13 illustre les résultats obtenus avec une vitesse de projection V= 60 m/s dans une représentation similaire à la figure 8. La courbe 60 représente la dureté Vickers en surface et la courbe 61 l'épaisseur zₙ observée visuellement. Il est observé que l'épaisseur zₙ sature à un niveau proche de 60 µm dès R= 3000%. Avec des petites particules comme le type S070, ce taux de recouvrement peut être atteint rapidement, par exemple en moins de 300s avec un matériel de grenaillage courant.

La figure 14 illustre les résultats obtenus avec une vitesse de projection V= 92 m/s dans une représentation similaire à la figure 8. La courbe 62 représente la dureté Vickers en surface et la courbe 63 l'épaisseur zₙ. Il est observé que l'épaisseur zₙ sature à un niveau proche de 80 à 90 µm dès R= 3000%.

### Essai 8

Une deuxième série d'essais va maintenant être décrite. Dans cette deuxième série d'essais, les profils de dureté d'échantillons ont été mesurés avec une méthode plus précise afin de fournir une définition de la couche nanostructurée fondée uniquement sur la courbe de dureté du matériau.

Le tableau 10 relate les résultats de la deuxième série d'essais réalisée selon les mêmes conditions que l'essai 1 présenté dans le tableau 2.

La méthode utilisée pour réaliser le profil de dureté lors de cette deuxième série d'essais consiste à effectuer une ligne d'indentation avec un pas de 10µm à partir de 20µm de l'extrême surface jusqu'à une profondeur de 100µm. La ligne d'indentation est ensuite poursuivie avec un pas de 50µm jusqu'à 300µm de profondeur. La ligne d'indentation est réalisée avec un microduromètre Vickers à pointe pyramidale avec une charge de 25g (HV 0,025) qui possède un objectif. Il s'agit d'un microduromètre Buehler Micromet 5104 comprenant une table motorisée présentant un pas de 1µm et un logiciel de pilotage et de mesure Buehler Omnimet Mhtsa. Le profil de dureté est ainsi obtenu de 20µm à 300µm de profondeur. Les valeurs communiquées sont une moyenne de trois lignes d'indentations pour avoir une mesure fiable et reproductible. De la même manière que dans les essais précédents, la surface des échantillons et la couche nanostructurée sont visualisées par microscopie optique. L'observation des échantillons est effectuée à l'aide d'un microscope Zeiss axio scope A1, d'une caméra Qimaging Micropublisher 5.0 RTV, d'un objectif Zeiss EC EPIPLAN X10/0.2HD et du logiciel Axiovision 4.8.

Les trois premières colonnes du tableau 10 correspondent aux trois premières colonnes du tableau 2. La quatrième colonne mentionne l'épaisseur de la couche nanostructurée, notée zₙₕ par référence à la dureté (hardness). En effet, dans l'essai 8, l'épaisseur de la couche nanostructurée zₙₕ a été obtenue par une méthode uniquement basée sur le profil de dureté en fonction de la profondeur z. Pour cela, un seuil de dureté est déterminé en calculant la valeur médiane de la dureté entre la dureté mesurée sur la couche superficielle et la dureté de l'échantillon dans la couche profonde dans laquelle la matière n'est pas sensiblement modifiée par le grenaillage.

L'épaisseur de la couche nanostructurée zₙₕ correspond donc à la profondeur à laquelle l'augmentation de la dureté est égale à la moitié de l'augmentation de dureté observée en surface de l'échantillon après traitement de cette surface.

La cinquième et la sixième colonne mentionnent la dureté à la surface de l'échantillon sur la face traitée et sur la face non traitée. Ces valeurs correspondent aux premiers points de mesure de la courbe de dureté mesurée, c'est-à-dire à 20µm de profondeur. Globalement, on mesure la dureté plus près de la surface que dans l'essai 1, de sorte que la valeur de dureté est plus élevée que dans le tableau 2. En effet, la taille des grains à proximité de la surface varie selon un gradient. Ainsi, dans une zone d'extrême surface, la taille des grains varie entre 10 et 50nm, et, dans une zone plus profonde, la taille des grains varie entre quelques dizaines de nanomètres à plusieurs centaines de nanomètres. Par ailleurs, on mesure la dureté avec une charge plus importante dans l'essai 1 que dans la deuxième série d'essais, L'empreinte réalisée dans le matériau présente donc des dimensions plus importantes dans l'essai 1 et engendre donc une mesure moins précise.

La dernière colonne du tableau 10 mentionne la marge d'incertitude de la mesure d'épaisseur zₙₕ résultant de la marge d'incertitude du microduromètre. En effet, les mesures de dureté présentent une incertitude d'environ ±10 Vickers pour l'acier E24, ±9.5 Vickers pour l'acier 32CrMoV13 et ±13.5 Vickers pour l'acier 304L. Pour une meilleure précision de la mesure de dureté, la charge du duromètre est adaptée en fonction de la dureté du matériau : une charge plus importante est utilisée pour des matériaux plus durs. Ainsi, une charge de 50g (HV 0,050) est utilisée pour l'acier 32CrMoV13 et pour l'acier 304L.

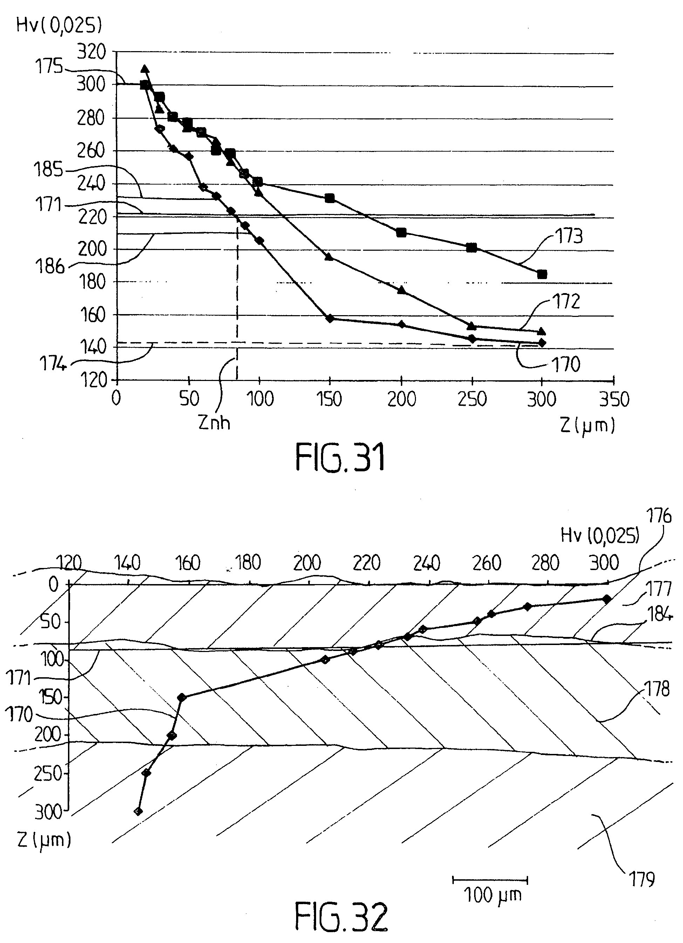

La figure 31 représente les profils de dureté obtenus par la méthode exposée ci-dessus pour les échantillons correspondant aux échantillons de l'essai 1 avec R=3000%. La courbe 170 correspond à la grenaille type S170. La courbe 172 correspond à la grenaille type S330. La courbe 173 correspond à la grenaille type S550. Sur toutes les courbes 170, 171 et 173, il apparaît une zone de très haute dureté qui correspond à la couche nanostructurée 3 et une seconde zone où la dureté diminue plus progressivement avec la profondeur et qui correspond à l'écrouissage du matériau.

A titre d'exemple, sur la figure 31, la valeur de dureté 174 mesurée dans la couche profonde et la valeur de dureté maximale 175 mesurée sur la couche superficielle de l'échantillon associé à la courbe 170 sont respectivement égales à 142 et 300 Vickers. Le seuil 171 correspondant présente une valeur de 221 Vickers, ce qui correspond à la valeur médiane entre la valeur de dureté 174 mesurée dans la couche profonde de l'échantillon et la valeur de dureté maximale 175 mesurée sur la couche superficielle de l'échantillon.

Ce seuil permet de déterminer une épaisseur zₙₕ de la couche nanostructurée d'une valeur environ égale à 81.5µm pour l'essai correspondant à la grenaille S170.

Une plage d'incertitude de l'épaisseur zₙₕ de la couche nanostructurée est donc déterminée à partir du seuil de dureté et de la plage d'incertitude de la dureté. A titre d'exemple, pour le seuil 171 de 221 Vickers précédemment présenté, les valeurs limites de l'épaisseur de la couche nanostructurée sont reportées pour des valeurs de dureté 185 et 186 de respectivement 231 Vickers et 211 Vickers. Ainsi, l'épaisseur de la couche nanostructurée se situe dans une plage d'environ 69 à 92µm. Les plages d'incertitude de l'épaisseur de la couche nanostructurées sont présentée dans le tableau 10. Ainsi, du fait de l'incertitude de la dureté, l'épaisseur de la couche nanostructurée mesurée graphiquement présente elle aussi une incertitude mesurable.

Comme indiqué précédemment, La deuxième méthode de mesure fondée sur la dureté concorde de manière satisfaisante avec la méthode de détermination visuelle : la figure 32 représente schématiquement les zones observées sur les photographies en microscopie optique de l'échantillon correspondant à la courbe 170 de la figure 31 (grenaillage S170 à R=3000%). Le profil de dureté 170 en fonction de la profondeur z depuis la surface de l'échantillon est reporté sur la représentation schématique de ces zones.

On observe, sur la figure 32, une couche surfacique nanostructurée 177 correspondant à une zone dans laquelle la matière est sensiblement amorphe et homogène. La couche 177 correspond à la zone plus sombre observée sur les figures 17 à 19. La couche 177 s'étend depuis la surface 176 de la pièce jusqu'à une deuxième couche 178. Cette deuxième couche 178 correspond à la zone dans laquelle on observe des joints de grains et dans laquelle la taille des grains délimités par les joints de grains augmente avec la profondeur. Sur les photographies en microscopie optique, la couche 178 correspond à la zone qui s'étend à partir d'un brusque changement de contraste partant de la couche 177. Cette deuxième couche 178 correspond à la zone d'écrouissage du matériau. Une troisième couche 179 comprend une zone où la taille des grains reste constante. Le seuil de dureté 171 concorde sensiblement avec la limite 184 observée visuellement entre la couche surfacique nanostructurée 177 et la couche 178.

L'écart entre les valeurs d'épaisseur zₙ observées visuellement reportées dans le tableau 2 et les valeurs d'épaisseur zₙₕ reportées dans le tableau 10 provient essentiellement de la marge d'incertitude relativement élevée des mesures mentionnées dans le tableau 2 typiquement de l'ordre de ±30µm. En réalité, les observations visuelles reportées dans le tableau 2 englobent une partie de la couche de transition 178, ce qui explique les valeurs d'épaisseur plus élevées.

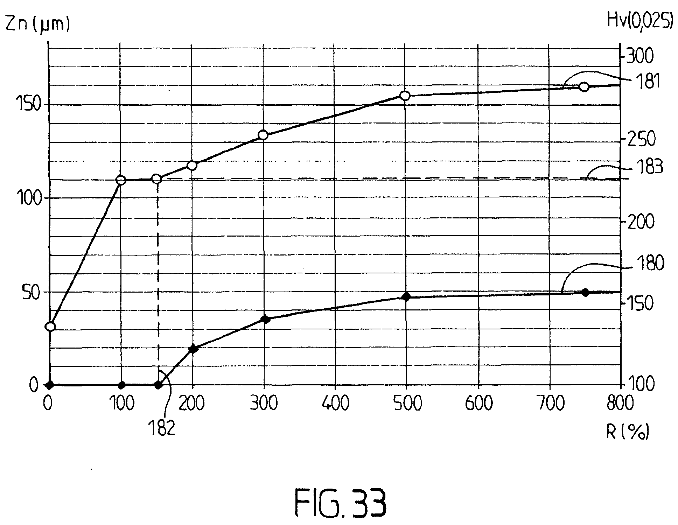

La méthode de mesure d'épaisseur fondée sur la dureté décrite ci-dessus peut présenter un écart avec l'observation optique lorsque l'épaisseur de la couche nanostructurée est fine, ce qui correspond au cas des échantillons de l'essai 8 à un taux de recouvrement inférieur à 750%. Une autre méthode pour déterminer l'épaisseur de la couche nanostructurée peut alors être utilisée. Cette autre méthode est aussi fondée sur le principe de déterminer l'épaisseur de la couche nanostructurée à partir d'un seuil de dureté. Cette méthode part de l'observation que, lorsqu'elle apparait sur l'échantillon et donc lorsqu'elle présente une épaisseur très fine, la couche nanostructurée 3 présente une valeur de dureté en surface qui correspond à ce seuil. A titre illustratif, en référence à la figure 33, la courbe 180 représente l'épaisseur de la couche nanostructurée en fonction du recouvrement et la courbe 181 représente la dureté surfacique de l'échantillon en fonction du recouvrement pour l'essai de grenaillage S170. Une épaisseur minimale détectable 182 de la couche nanostructurée apparaît pour un recouvrement de 150%. Or, la dureté surfacique 183 mesurée lors de cette apparition de la couche nanostructurée est de 226 Vickers. Ce seuil de dureté de 226 constitue une valeur réaliste du seuil de dureté pour déterminer l'épaisseur de la couche nanostructurée après un traitement avec un recouvrement inférieur à 750%. Cette valeur alternative présente une valeur proche du seuil de dureté déterminé à l'aide de la valeur médiane à R=3000% (221 Vickers). Dans l'essai 8 reporté dans le tableau 10, les seuils de dureté ont été déterminés avec cette autre méthode pour les valeurs de recouvrement inférieures à 750%. Dans le tableau 10, les valeurs déterminées avec cette autre méthode comportent un astérisque.

Ces résultats sont à comparer à ceux présentés à la figure 4 de la publication ISIJ International citée plus haut, où l'alliage Fe-3.3Si utilisé présente une structure cristalline ferritique comparable à Fe-0.03C. L'essai 6 démontre l'obtention d'une épaisseur nanostructurée plus élevée avec un taux de recouvrement, une taille des particules et une vitesse de projection plus faibles que dans cette publication. Il est noté que la comparaison des taux de recouvrement nécessite un calibrage du fait de définitions différentes dans les deux cas. L'utilisation d'une vitesse de projection plus faible peut s'avérer avantageuse pour réduire la rugosité de l'échantillon traité ou préserver un matériau plus vulnérable aux micro fissurations.

### Essai 7

Un essai 7 a été effectué avec des échantillons de fer pur à 0,03C (99,8% Fe) et des grenailles de type S170. Les autres conditions sont similaires à l'essai 1.

La figure 15 illustre les résultats obtenus avec une vitesse de projection V= 57 m/s dans une représentation similaire à la figure 8. La courbe 64 représente la dureté Vickers en surface et la courbe 65 l'épaisseur zₙ. Les chiffres 44, 45 et 46 ont la même signification que sur la figure 8. Il est observé que l'épaisseur zₙ sature à un niveau proche de 100 µm.

Ces résultats sont à comparer à ceux présentés aux figures 3(a) et 4(b) de la publication Materials Transactions citée plus haut. En particulier, des épaisseurs bien plus élevées sont obtenues dans un temps beaucoup plus faible et avec un procédé bien plus flexible que le grenaillage ultrasonique USSP pour la même taille de grenaille.

Bien que les résultats présentés ci-dessus soient obtenus avec des échantillons métalliques plans, les procédés mis en oeuvre sont applicables à des pièces métalliques de toute forme. En particulier, pour traiter une surface non plane, il est possible de traiter successivement des portions limitées de la surface non plane, en orientant à chaque fois la portion de surface traitée de manière que les conditions d'angle décrites précédemment en référence à la surface plane soient approximativement respectées pour chaque portion successive de la surface non plane. Par portion successive, on entend ici une portion de surface relativement petite par rapport au rayon de courbure local, de sorte qu'une orientation moyenne de la portion de surface puisse être définie, et relativement grande par rapport à la taille des grenailles projetées, de sorte qu'un grand nombre d'impacts soit statistiquement envisageable. Certaines géométries non planes sont susceptibles de produire des impacts multiples d'une même particule sur la pièce, c'est-à-dire des rebonds. Toutefois, étant donné que les rebonds entraînent de très fortes déperditions d'énergie, il est présumé que c'est l'incidence primaire de la particule, c'est-à-dire l'incidence avant le premier impact sur la pièce qui est la plus significative.

Pour autant qu'il ne soit pas désiré ou même possible de réaliser les conditions d'orientation précitées pour chaque portion de surface de la pièce à traiter, il est préférable d'identifier les parties de la pièce métallique destinées à être les plus sollicitées dans son utilisation finale, que l'on appellera surfaces de travail de la pièce. Par exemple, les surfaces de travail d'un pignon d'engrenage sont généralement les fonds des dents. Le traitement de nanostructuration d'un pignon peut donc être réalisé, dans un mode de réalisation particulier, en orientant successivement les surfaces de fond de dent en face du jet de particule, de manière à réaliser l'orientation particulière des incidences primaires des particules sur la surface de fond de dent.

Une seule buse de projection a été présentée dans le mode de réalisation de la machine de la figure 2. Toutefois, il est aussi possible de concevoir une machine de grenaillage avec plusieurs buses de projection. Ces buses de projection peuvent notamment être agencées de manière à viser la même surface de la pièce selon plusieurs incidences différentes. Des buses de projection peuvent aussi être agencées de manière à viser différentes surfaces de la pièce à traiter.

D'autres dispositions relatives des buses de projection et du support de la pièce sont envisageables pour produire des incidences primaires des particules qui soient distribuées dans un cône ou une pellicule conique présentant un demi-angle externe au sommet compris entre 10° et 45°. En particulier, un déplacement peut être réalisé au niveau des buses de projection.

### Combinaison du grenaillage avec des procédés thermochimiques

Les procédés de nanostructuration décrits précédemment sont combinés à des traitements thermochimiques pour modifier par diffusion, la composition chimique des couches superficielles des matériaux métalliques et leur conférer des propriétés mécaniques, physiques et chimiques particulières, par exemple de façon à améliorer la résistance à l'usure, la résistance à la fatigue, la résistance à l'oxydation à chaud ou à froid, ou la résistance à la corrosion. Dans ce cas, la modification chimique superficielle n'altère pas la composition chimique du coeur du métal. La modification chimique superficielle peut être associées à un traitement thermique. Le choix de l'élément diffusé et du traitement thermique dépend des propriétés recherchées en surface et à coeur.

Les principaux traitements thermochimiques utilisables dans ce but sont mentionnés dans le tableau 9 ci-dessous.

**Tableau 9 : principaux traitements thermochimiques**

| SYSTEME CHIMIQUE | APPELLATION | RESISTANCES RECHERCHEES |
|---|---|---|
| Fe-N | Nitruration | Frottement (usure) - fatigue corrosion |
| Fe - C | Carburation | Frottement (usure) - fatigue de contact sous fortes charges |
| Fe - C - N | Carbonitruration | Frottement (usure) - fatigue de contact sous charge modérée |
| Fe - S | Sulfuration | Frottement (grippage) |
| Fe - S - N | Sulfonitruration | Frottement (grippage - usure) - fatigue -corrosion |
| Fe-C-N-S | Sulfocarbonitruration | Frottement (grippage - usure) - fatigue - corrosion |
| Fe-B | Boruration | Frottement (usure) |
| Fe-Al | Aluminisation | Oxydation à chaud |
| Fe - Cr | Chromisation | Abrasion - oxydation |
| Fe-Cr-Al | Chromoaluminisation | Abrasion - oxydation à chaud |
| Fe - Si | Siliciuration | Résistance aux acides |

Du fait de l'application préalable du traitement de nanostructuration, il est utile de distinguer entre des traitements thermochimiques qui peuvent être effectués sans qu'une recristallisation substantielle n'ait lieu dans la phase nanostructurée, c'est-à-dire typiquement les traitements à des températures relativement basses qui ne représentent pas l'invention , et des traitements thermochimiques qui occasionnent une recristallisation substantielle de la phase nanostructurée, c'est-à-dire typiquement les traitements à des températures relativement hautes.

### Traitements à basse température utiles à la compréhension de l'invention

Dans les traitements thermochimiques dont la température n'excède pas environ 590°C pour l'acier, la taille de grain dans la couche nanostructurée n'évolue pas substantiellement pendant le procédé de diffusion. La nanostructuration de la matière a pour effet de multiplier procédé de diffusion. On observe ainsi qu'un procédé de diffusion conduit après un grenaillage nanostructurant présente une efficacité plus élevée en termes de cinétique et de profondeur de diffusion qu'en l'absence des nanostructures. De plus, la nanostructuration limite la taille et la connexité des joints de grains, de sorte que des phénomènes de précipitation, notamment précipitation de carbonitrures, sont inhibés dans la couche nanostructurée.

Des essais de nitruration relatés ci-dessous en relation avec le tableau 6 illustrent ces points.

### Essai 8.1

On utilise un échantillon plat d'acier inoxydable 304L. La nitruration est effectuée dans un four à plasma pendant un palier de 100h à 350°C.

Sur la pièce nitrurée sans grenaillage, il se forme une couche d'austénite à l'azote de 3 à 5 microns d'épaisseur. Sur la pièce nitrurée avec grenaillage, on observe une couche sombre nanostructurée enrichie en azote de structure mixte martensite/austénite entre 4 et 10 microns de profondeur.

La dureté Vickers a été mesurée à la surface de la pièce sous une charge de 25 et 50 g. Elle est augmentée d'environ 30% par le traitement de grenaillage préalable et peut atteindre environ 1000 HV.

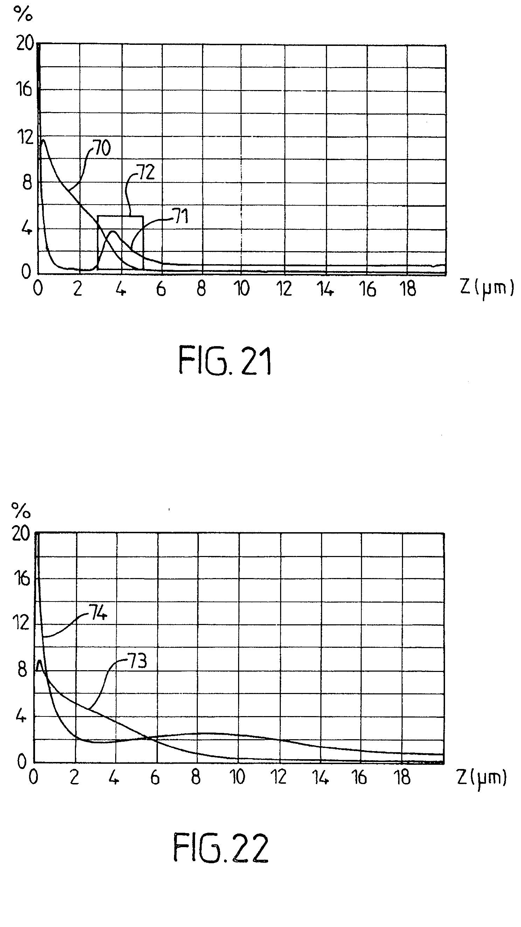

Les figures 21 et 22 représentent la concentration (fraction massique) d'azote et de carbone en fonction de la profondeur respectivement pour une pièce nitrurée sans grenaillage préalable (courbes 70 et 71) et pour une pièce successivement grenaillée et nitrurée (courbes 73 et 74).

Sans traitement de grenaillage, la diffusion s'arrête vers 5 microns avec un taux d'azote de 0,06 %. Le taux d'azote en surface est autour de 11 %. On constate aussi la présence d'une sous couche 72 enrichie en carbone au front de diffusion d'azote, autour de 5 microns de profondeur.

Avec le traitement de grenaillage préalable, la diffusion d'azote est plus profonde. Le taux d'enrichissement en surface est d'environ 9 %. La sous-couche enrichie en carbone est atténuée par le traitement de grenaillage, d'où il résulte un profil de concentration en carbone plus continu.

### Essai 8.2

On utilise un échantillon plat d'acier inoxydable 304L. La nitruration est effectuée dans un four à plasma pendant un palier de 100h à 400°C.

L'augmentation de température favorise la diffusion d'azote vers de plus grandes profondeurs. Sur la pièce sans grenaillage, il se forme une couche blanche régulière constituée principalement d'austénite à l'azote de 8 à 10 microns de profondeur. La pièce grenaillée se caractérise par une couche sombre nanostructurée ayant 8 à 15 microns de profondeur. Le gain de profondeur d'enrichissement peut aller jusqu'à 50 % grâce au grenaillage préalable.

Le gain d'effet durcissant est d'au moins 15 % par rapport au traitement de nitruration sans grenaillage préalable : la dureté Vickers mesurée à la surface tend vers 1300 HV, contre environ 1150 HV sans grenaillage préalable.

De plus, on constate les mêmes phénomènes qu'à l'essai 8.1, c'est-à-dire un profil de carbone plus continu avec le traitement de grenaillage.

Pour les aciers inoxydables austénitiques type 304L, 304, 316 ou 316L, le durcissement se produit notamment par la diminution de taille de grain et par la transformation partielle ou totale de l'austénite en martensite dite d'écrouissage. Toutefois, la formation de martensite d'écrouissage tend à réduire fortement les propriétés de tenue à la corrosion de ces aciers. Ainsi, un grenaillage avec un recouvrement trop important sur un tel matériau réduit les propriétés de résistance à la corrosion du matériau. Les inventeurs ont donc constaté qu'un recouvrement entre 1000 et 2000% pour ce type d'aciers présente le meilleur compromis pour bénéficier de l'effet de durcissement sans dégrader fortement les propriétés anticorrosion.

### Essai 9.1

On utilise un échantillon plat en acier de structure 32CrMoV13 trempé revenu vers 600°C.

Sur la pièce nitrurée à 480 °C sans traitement de grenaillage, on constate la présence d'une fine couche blanche homogène de nitrure de fer de 1 à 2 microns d'épaisseur. De nombreux précipités de réseaux de carbonitrures sont présents dans la couche de diffusion. Lorsque la concentration d'azote croit, ces précipités tendent à former une couche relativement continue qui constitue une zone de fragilité de la pièce et qui favorise l'écaillage de la surface.

Sur la pièce nitrurée à 480 °C avec nanostructuration, il y a un début de croissance d'une couche blanche de 1 à 3 microns d'épaisseur. Dans la couche nanostructurée, la diffusion de l'azote ne s'est pas accompagnée de l'apparition visible de réseaux de nitrures ou carbonitrures.

La dureté à la surface est augmentée d'environ 15 % grâce au traitement de grenaillage préalable par rapport à la nitruration seule.

### Essai 9.2

On utilise un échantillon plat en acier de structure 32CrMoV13 trempé revenu vers 600°C.

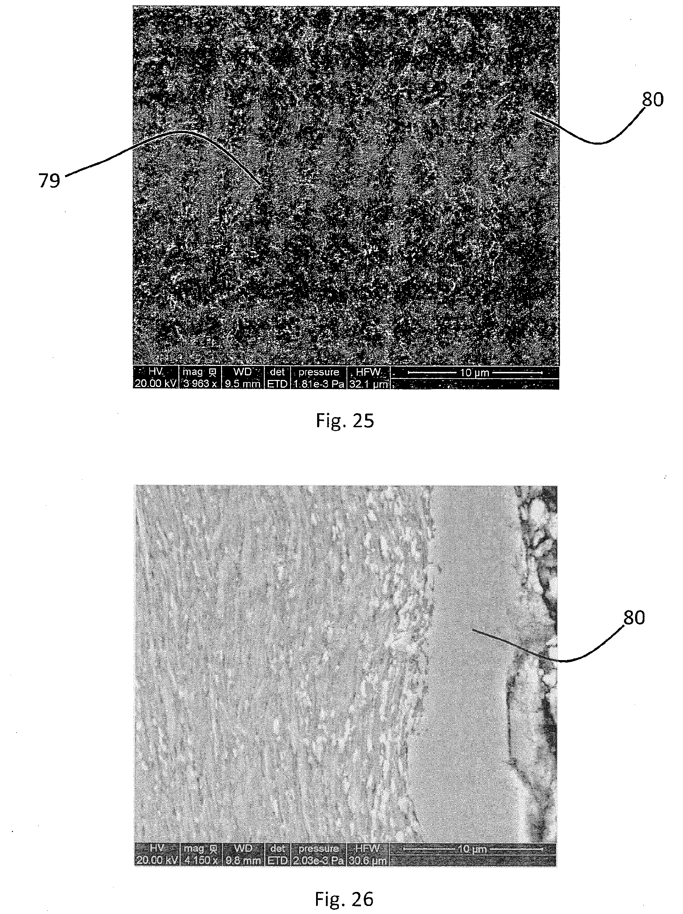

La figure 25 est une image de microscopie électronique montrant la section de l'échantillon à proximité de sa surface, pour un traitement de nitruration gazeuse à 520 °C sans nanostructuration préalable. Sans grenaillage préalable, on constate la présence d'une sous-couche dans la partie inférieure de la couche blanche 80 à l'interface avec la couche de diffusion qui est sérieusement enrichie en carbone (0,6 %). Ceci favorise le développement de réseaux de carbonitrures connexes et donc fragilisants visibles au chiffre 79.

La figure 26 est une image de microscopie électronique montrant la section de l'échantillon à proximité de sa surface, pour un traitement de nitruration gazeuse à 520 °C après nanostructuration préalable. Avec la nanostructuration préalable, le traitement de nitruration gazeuse à 520 °C conserve une couche de matière nanostructurée dans laquelle les précipités de carbonitrures sont finement dispersés dans les joints de grains sans former de réseaux de carbonitrures dans la couche affectée par le traitement de nanostructuration. La profondeur de diffusion d'azote, autour de 260 microns, n'est pas affectée négativement par le traitement de nanostructuration. Le taux d'enrichissement en azote à l'extrême surface dans la couche blanche dépasse 14 % pour tendre vers 18 % avec le traitement de nanostructuration.

Un durcissement supplémentaire, estimé autour de 10 %, est obtenu par l'effet du traitement de nanostructuration non seulement en surface mais aussi sur les 100 premiers microns. La dureté de surface tend vers les 1000 HV.

L'épaisseur de la couche blanche 80 est très similaire entre les deux traitements et autour de 10 microns. A 50 microns de profondeur, les taux d'azote sont proches : 1,5 % avec nanostructuration et 1,3 % sans nanostructuration.

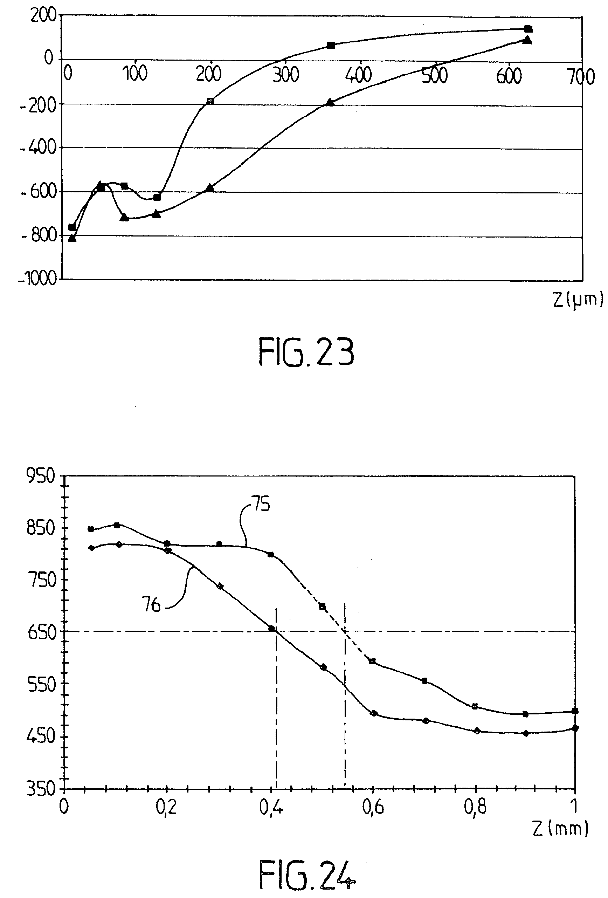

La figure 23 représente la contrainte de compression résiduelle en fonction de la profondeur pour différents traitements :
- Carrés : traitement de nitruration suivi d'un grenaillage de pré-contrainte
- Triangles : traitement de nanostructuration suivi successivement d'un traitement de nitruration et d'un grenaillage de pré-contrainte.

Les deux profils de contraintes sont sensiblement identiques en termes de valeurs de contraintes de compression jusqu'à une profondeur de 50µm. Au-delà de 50µm de profondeur, l'échantillon traité par nanostructuration, nitruration et grenaillage de pré-contrainte montre une augmentation significative des valeurs et profondeurs de contraintes par rapport à un traitement de nitrutration et grenaillage de pré-contrainte seuls. Le gain en profondeur de compression est de près de 200 microns. Ceci peut favoriser la tenue en fatigue si les contraintes de cisaillement sont profondes et situées dans cette zone, notamment dans le cas de sollicitation en roulement.

De manière plus générale, on constate qu'un grenaillage présentant un recouvrement entre 1000% et 2000% permet d'obtenir le meilleur compromis entre les propriétés mécaniques de durcissement résultant de la diffusion relativement profonde de l'azote et l'état de surface de l'acier sur un acier structural, notamment un acier 32CrMoV13. En effet, au-delà de 2000%, les déformations provoquées par le grenaillage génèrent un état de surface qui peut s'avérer inadapté à des utilisations typiques d'un tel acier, notamment en mécanique de précision et pignonnerie.

### Essai 9.3

On utilise un échantillon plat d'acier à outils X38CrMoV5, trempé double revenu à 40-43 HRC, soumis à un traitement de nitruration gazeuse à 520°C.

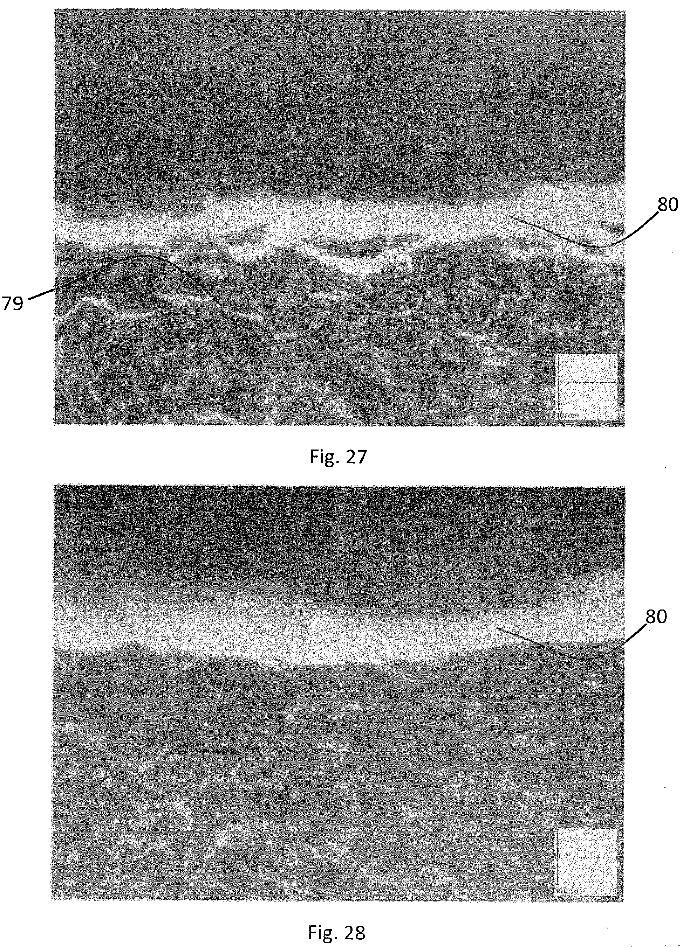

La figure 27 est une image de microscopie optique montrant la section de l'échantillon soumis au traitement de nitruration sans nanostructuration préalable. La figure 28 est une image de microscopie optique montrant la section de l'échantillon soumis au traitement de nitruration après nanostructuration préalable. La zone proche de la surface de l'échantillon est à chaque fois montrée.

Le traitement de nanostructuration a permis de conserver une nanostructure avec une forte atténuation des précipités de réseaux de carbonitrures, visibles au chiffre 79 sur la figure 27. Le traitement de nitruration à 520 °C a permis aussi d'obtenir une couche nitrurée aussi profonde avec ou sans le traitement de nanostructuration. Les profondeurs conventionnelles d'enrichissement en azote sont respectivement de 145 microns sans traitement de nanostructuration et 170 microns avec traitement de nanostructuration. Les duretés Vickers de surface sont du même niveau et autour de 1300 HV.

Dans cet essai encore, la présence d'une nanostructure limite donc la précipitation de réseaux de carbonitrures sous la couche blanche 80. Le gain attendu est donc une meilleure tenue au choc et à l'écaillage sous la couche de combinaison. Pour des outillages comme ceux utilisés en forge ou en fonderie, ceci se traduit par une plus longue durée de vie.

Pour les aciers à outils, notamment l'acier X38CrMoV5, il a été constaté qu'une couche nanostructurée présentant une épaisseur d'au moins 40µm permettait une amélioration significative de la nitruration. Une telle épaisseur peut être notamment obtenue par un recouvrement d'au moins 3000% à l'aide de grenailles de type S170. L'utilisation de grenailles de taille plus importante, typiquement S280 ou S330, permettrait d'obtenir la même épaisseur avec un recouvrement réduit mais dégraderait de façon plus importante l'état de surface de la pièce traitée.

### Traitements à haute température

Les procédés de diffusion à basse température limitent la taille atomique des éléments qu'il est possible de faire diffuser dans le métal. En revanche, dans les procédés à haute température, au-dessus d'environ 750°C pour l'acier, il se produit une recristallisation qui peut effacer la nanostructuration surfacique. Une haute température est notamment nécessaire dans un procédé de carbonitruration à basse pression, qui consiste à injecter l'azote à chaud dans une enceinte sous vide et qui permet de limiter l'oxydation de la matière par rapport aux procédés de carbonitruration classiques.

Toutefois, les inventeurs ont découvert qu'il est aussi possible d'obtenir une recristallisation à grains fins lorsqu'on soumet une pièce préalablement grenaillée à un procédé haute température comme la carbonitruration à basse pression. La grosseur de recristallisation dépend du taux d'écrouissage obtenu par grenaillage, de la température et de la durée du traitement thermochimique.

Grâce à la finesse des grains, par exemple supérieure ou égale à 10, de préférence supérieure ou égale à 12 selon la norme NF A 04-102, il est possible d'obtenir une forte densité de joints de grains débouchant sur la surface, qui favorisent la diffusion et permettent d'augmenter les concentrations en azote et éventuellement en carbone des couches carbonitrurées et les vitesses de diffusion. En outre, il est aussi constaté que le traitement de nanostructuration préalable permet d'inhiber la précipitation de réseaux de carbonitrures denses, qui sont une cause de fragilité de la surface de la pièce.

Des essais de carbonitruration à basse pression relatés ci-dessous en relation avec le tableau 7 illustrent ces points.

### Essai 10

L'échantillon traité est une denture de pignon. Les inventeurs ont observé pour des conditions de nanostructuration trop intenses une recristallisation à gros grains. Ainsi un recouvrement de 400 à 1000% a été identifié comme étant la meilleure condition de grenaillage.

Pour évaluer la recristallisation en fonction de la durée, l'échantillon a été soumis à des essais de montée en température suivant différents modes pour atteindre un palier final à 880°C. Trois durées totales de traitement T ont été testées : 0,5h, 1,5h et 3h. A chaque fois, l'échantillon a refroidi à l'air libre. On sait par ailleurs que la cinétique de montée en température du four a une influence sur la nature de la recristallisation et qu'un chauffage progressif favorise une recristallisation à grains fins. C'est pourquoi des courbes de montée en température relativement progressives ont été choisies dans les exemples ci-dessous. Afin d'identifier les meilleures conditions de grenaillage, les essais ont été réalisé pour des taux de recouvrement différents et des types de grenaille différents. L'indice de grains selon la norme NF A 04-102 a été mesurée à la surface de chacun des échantillons correspondant à une durée du traitement et un taux de recouvrement correspondant.

Les résultats des essais ont été reportés sur le tableau 11 ci-dessous :

**Tableau 11 : Taille de grain mesuré sur l'échantillon en fonction du traitement de surface réalisé et la durée du traitement T**

| Durée totale du traitement thermique | Sans grenaillage (R=0%) | Grenaillage préalable S170, R=500% | Grenaillage préalable S170, R=750% | Grenaillage préalable S170, R=1000% | Grenaillage préalable S280, R=1000% |
|---|---|---|---|---|---|
| 0.5 h | 9 | ≥12 | ≥12 | >12 | ≥12 |
| 1.5 h | 9 | 12 | 12 | 11 | 8à9 |
| 3h | 9 | 9 | 9 | 9 à 10 | 8à9 |

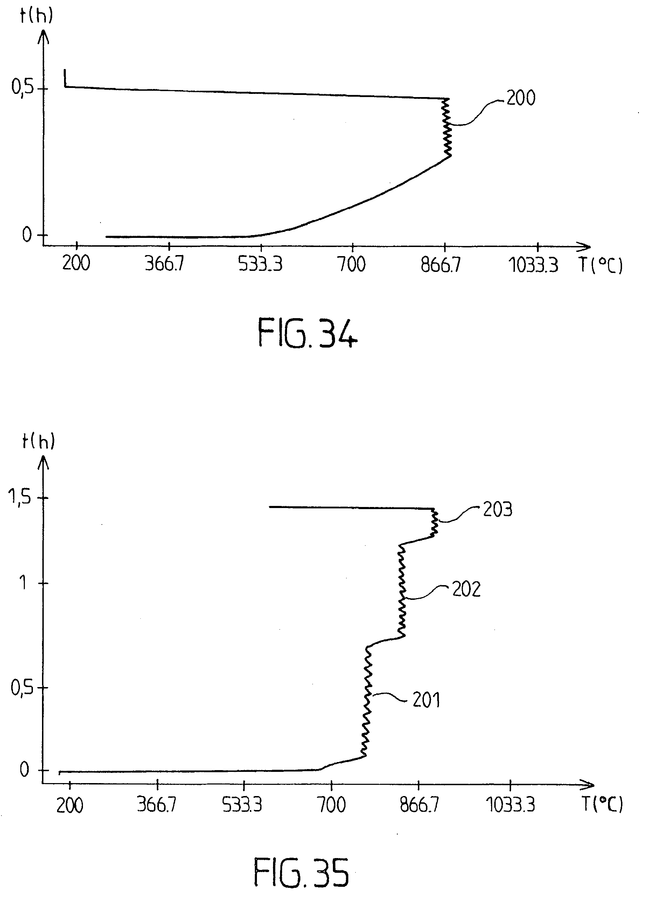

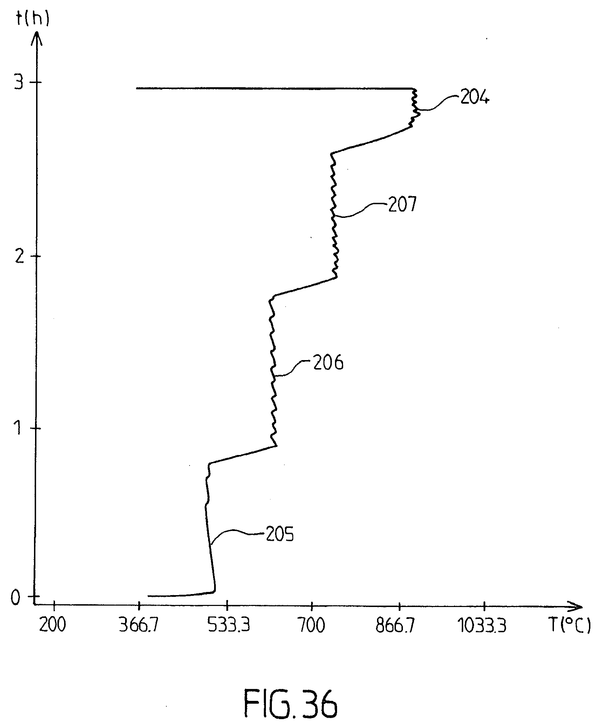

Sur les échantillons avec nanostructuration, les structures suivantes sont observées à l'issue de la montée en température et du refroidissement :
- T= 0,5h, correspondant à une montée progressive de 200 à 800°C : des grains ferritiques très fins (indice ≥ 12) sont observables en surface. Juste en-dessous, on assiste à un début de recristallisation, mais on retrouve très vite la structure sans nanostructuration.
   La courbe de température lors de l'essai T=0,5h est illustrée dans la figure 34. Dans un premier temps, la température monte progressivement avant d'atteindre, à environ T=0,3h, un palier 200 à 880°C, le palier de température 200 étant maintenu jusqu'à T=0,5h.
   Bien que ce traitement thermique court semble très avantageux quant à la finesse des grains obtenus en surface, il n'est pas adaptable à toutes les situations du fait de l'inertie themique des matériaux, qui peut empecher d'obtenir une température uniforme dans la pièce traitée en un temps aussi court dès lors que la taille de cette pièce est importante.
- T=1,5h correspondant à une montée de 200 à 800°C avec deux paliers intermédiaires : les grains très fins sont aussi présents en surface pour des recouvrements inférieurs ou égals à 1000% suivant la taille de la grenaille. On observe clairement que la recristallisation aux joints triples devient de plus de plus visible et affecte une profondeur plus élevée lorsque le recouvrement R augmente. Pour R=1000%, on note un phénomène de grossissement des grains ferritiques à la surface de cet acier ce qui se traduit par un indice de taille de grain inférieur à 12.
   La courbe de température lors de l'essai T=1,5h est illustrée dans la figure 35. La température monte jusqu'à un palier 201 à 760 °C maintenu jusqu'à environ T=0,75h. La température est augmentée ensuite jusqu'à un palier 202 d'une température d'environ 850°C maintenu jusqu'à T=1.25h, puis la température est amenée à un palier final 203 à 880°C jusque la fin de l'essai.
- T=3h correspondant à une montée de 200 à 800°C avec trois paliers intermédiaires : l'ensemble des nanostructurations testées conduit à un phénomène de grossissement des grains ferritiques en surface avec des indices inférieurs ou égaux à 9 et juste sous la surface. Puis, en dessous, une recristallisation à grains fins est parfaitement identifiée.
   La courbe de température lors de l'essai T=3h est illustrée dans la figure 36. Lors de l'essai, la température est amenée progressivement à un palier de température 204 de 880°C par l'intermédiaire de trois paliers de température : un premier palier 205 à une température d'environ 533°C suivi à T=1h d'un second palier 206 à une température d'environ 630°C, suivi lui-même à T=2h d'un troisième palier 207 à une température d'environ 740 °C. Le palier 204 est atteint à environ T=2,75h.

On constate donc qu'une recristallisation à gros grains (indice <10) a lieu si la durée de traitement thermique est trop importante, alors qu'on peut observer des grains fins (indice ≥ 10) pour les traitements thermiques d'une durée inférieure à 3 heures. Le traitement à haute température en 1,5h apparait donc comme un bon compromis pour l'obtention d'une recristallisation à grains fins sur des pièces mécaniques habituelles. La taille de grain obtenue dépend cependant à la fois des paramètres du traitement thermique et des paramètres du grenaillage préalable.

Ainsi, on peut noter qu'un recouvrement trop important, c'est-à-dire supérieur ou égal à 1000%, favorise la recristallisation avec des grains plus gros, en particulier dans le traitement en 1,5h. Par ailleurs, les inventeurs on constaté que lorsque le taux de recouvrement est trop important, les déformations de la pièce produites par le grenaillage deviennent trop importantes, ce qui dégrade son état de surface. C'est le cas notamment pour des échantillons soumis à des taux de recouvrement de 1000%. Ainsi, les inventeurs ont constaté qu'un taux de recouvrement inférieur ou égal à 1000% permettait d'obtenir le meilleur compromis pour l'état de surface tout en évitant le grossissement des grains. En particulier, dans le cas où l'état de surface est une propriété essentielle de la pièce à traiter, il peut être nécessaire de réduire le taux de recouvrement. Dans ce cas, un recouvrement de 400 à 500% peut être choisi.

Des résultats quantitatifs et qualitatifs similaires ont aussi été observés avec des échantillons constitués d'acier de type pignonnerie 20MnCr5 et 27MnCr5. Les observations ci-dessus s'appliquent à d'autres aciers alliés, notamment des aciers de type pignonnerie, par exemple les aciers 20CrMo4, 27CrMo4, 18MnCrB5, 29MnCr5, 15MnCrMo5, 18NiCrMo5, ou 20NiCrMo7.

Pour R=500% et T= 1,5h, la taille moyenne des grains est environ 3,3 µm, soit 12 joints débouchants dénombrés en surface sur 40 µm.

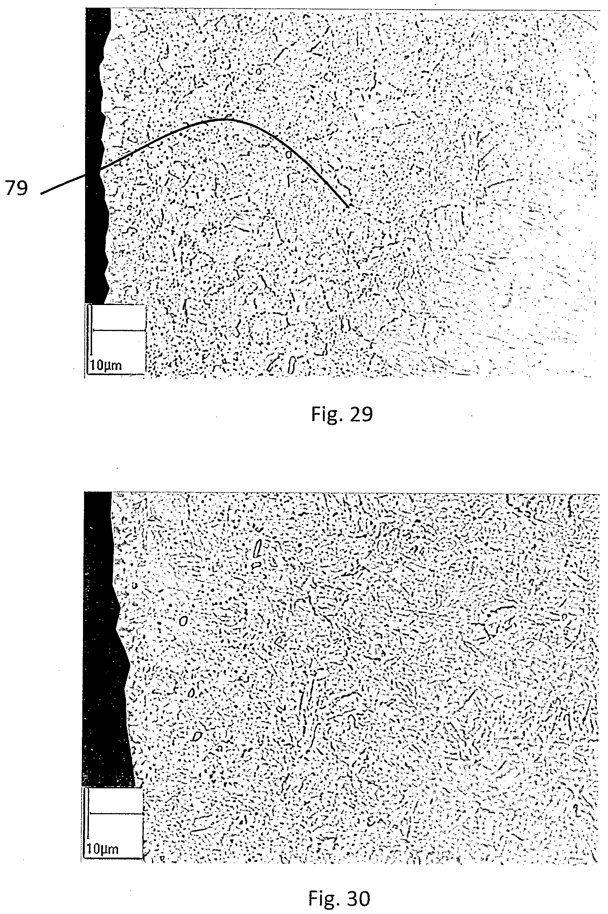

La figure 29 est une image de microscopie optique montrant la section de l'échantillon soumis au traitement de carbonitruration à basse pression sans nanostructuration préalable.

La figure 30 est une image de microscopie optique montrant la section de l'échantillon soumis au traitement de carbonitruration à basse pression après nanostructuration préalable.

Une zone de l'échantillon située entre 0,4 et 0,6 mm de profondeur est à chaque fois montrée. Pour les essais de carbonitruration à basse pression, la durée T=1,5h a été retenue.

Les essais ont conduit à observer que la nanostructuration fait disparaître les réseaux de carbonitrures. En effet, la structure observée à l'issu du traitement de carbonitruration est composée de martensite et d'un début de réseau de carbonitrures aux joints des grains visible au chiffre 79 sur la figure 29 pour un échantillon sans grenaillage préalable, alors que la surface avec nanostructuration ne comporte que de la martensite, difficile à attaquer, dans laquelle sont répartis des globules de carbonitrures. L'indice de taille de grain mesuré selon NF A 04-102 à la surface de l'échantillon est égal à 9 pour l'échantillon de la figure 29 et égal à 12 pour l'échantillon de la figure 30. On peut supposer que les joints de grain dans lesquels sont localisés les globules de carbonitrures ont une taille proportionnelle à la taille du grain, de sorte que la finesse des grains inhibe la percolation des précipités de carbonitrures sous la forme des réseaux connexes.

La figure 24 représente la dureté de l'échantillon en fonction de la profondeur après carbonitruration à basse pression, avec grenaillage préalable (courbe 75) et sans grenaillage (courbe 76). On constate une nette augmentation de la profondeur durcie grâce à la nanostructuration préalable, la profondeur à laquelle une dureté de 650 est observée passant de 0,41mm sans nanostructuration à 0,54mm avec nanostructuration.

Sur le profil de concentration en carbone, on ne constate aucun changement entre l'échantillon simplement carbonitruré et l'échantillon ayant subi les deux traitements. En revanche, la nanostructuration améliore le profil de concentration en azote sur les deux premiers dixièmes de mm sous la surface, ce qui explique le plus haut palier de dureté. Ce gain est mesuré dans le tableau 8 ci-dessous.

**Tableau 8 : fraction massique d'azote (%) en fonction de la profondeur après carbonitruration à basse pression**

| Profondeur z (mm) | Echantillon sans nanostructuration | Echantillon avec nanostructuration | Gain (%) |
|---|---|---|---|
| 0,06 | 0,13 | 0,21 | 62 |
| 0,10 | 0,12 | 0,16 | 33 |
| 0,15 | 0,10 | 0,14 | 40 |
| 0,20 | 0,09 | 0,11 | 22 |
| 0,25 | 0,08 | 0,08 | 0 |

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

En particulier, les modes de réalisation décrits dans les exemples concernent des matériaux initialement homogènes sur lesquels les procédés de grenaillage décrits permettent de former des couches surfaciques nanostructurées relativement épaisses. Il est possible de caractériser le taux de recouvrement appliqué à un matériau donné par l'épaisseur de la couche nanostructurée que ce recouvrement a permis d'obtenir. Dès lors, l'application d'un taux de recouvrement similaire à un matériau ayant subi d'autres traitements préalables est aussi susceptible de produire efficacement des couches surfaciques nanostructurées, même si ce matériau prétraité ne correspond pas aux exemples décrits, par exemple un matériau hétérogène.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel. Dans les revendications, tout signe de référence entre parenthèses ne saurait être interprété comme une limitation de la revendication.

**Tableau 2 : essai 1, acier E24, Dureté Rockwell des grenailles = 48HRC**

| Type de grenaille | V (m/s) | R (%) | zₙ (µm) | Dureté face traitée (HV) | Dureté face non traitée (HV) | Gain dureté (%) |
|---|---|---|---|---|---|---|
| | | 100 | 0 | 198 | 108 | 83% |
| | | 150 | 0 | 211 | 114 | 85% |
| | | 200 | 0 | 200 | 113 | 77% |
| | | 300 | 0 | 212 | 111 | 91% |
| | | 500 | 0 | 241 | 112 | 115% |
| S170 | 57 | 750 | 69 | 256 | 108 | 137% |
| | | 1000 | 72 | 263 | 111 | 137% |
| | | 1500 | 91 | 274 | 116 | 136% |
| | | 3000 | 129 | 308 | 113 | 173% |
| | | 6000 | 138 | 309 | 113 | 173% |
| | | 10000 | 140 | 302 | 116 | 160% |
| | | 100 | 0 | 215 | 130 | 65% |
| | | 150 | 0 | 224 | 132 | 70% |
| | | 200 | 0 | 224 | 138 | 62% |
| | | 300 | 67 | 247 | 139 | 78% |
| | | 500 | 91 | 262 | 137 | 91% |
| S280 | 52 | 750 | 101 | 278 | 138 | 101% |
| | | 1000 | 120 | 290 | 113 | 157% |
| | | 1500 | 134 | 295 | 116 | 154% |
| | | 3000 | 143 | 298 | 114 | 161% |
| | | 6000 | 178 | 301 | 113 | 166% |
| | | 10000 | 172 | 315 | 114 | 176% |
| | | 100 | 0 | 213 | 114 | 87% |
| | | 150 | 0 | 233 | 116 | 101% |
| | | 200 | 0 | 234 | 110 | 113% |
| | | 300 | 111 | 264 | 111 | 138% |
| | | 500 | 112 | 253 | 108 | 134% |
| S330 | 60 | 750 | 142 | 282 | 114 | 147% |
| | | 1000 | 160 | 290 | 114 | 154% |
| | | 1500 | 175 | 298 | 112 | 166% |
| | | 3000 | 192 | 310 | 123 | 152% |
| | | 6000 | 193 | 300 | 131 | 129% |
| | | 10000 | 186 | 304 | 142 | 114% |
| | | 100 | 0 | 206 | 129 | 60% |
| | | 150 | 0 | 216 | 144 | 50% |
| | | 200 | 0 | 223 | 131 | 70% |
| | | 300 | 0 | 227 | 135 | 68% |
| | | 500 | 0 | 243 | 145 | 68% |
| S550 | 49 | 750 | 104 | 278 | 148 | 88% |
| | | 1000 | 176 | 292 | 147 | 99% |
| | | 1500 | 168 | 279 | 153 | 82% |
| | | 3000 | 164 | 292 | 159 | 84% |
| | | 6000 | 175 | 295 | 157 | 88% |
| | | 10000 | 173 | 308 | 167 | 84% |

**Tableau 6 : traitements de nitruration après grenaillage**

| Définition de l'essai | Echantillon | Conditions de grenaillage | Conditions de nitruration | Epaisseur de couche à forte teneur d'azote (µm) | idem sans grenaillage (µm) | Taux d'azote en surface (%) | idem sans grenaillage (%) |
|---|---|---|---|---|---|---|---|
| Essai 8.1 | Acier inoxydable 304L | Taille= S170 | Plasma à 350°C pendant 100h | 4 à 10 | 3 à 5 | 9 | 11 |
| | | Dur.= 48 HRC | | | | | |
| Essai 8.2 | | V = 57 m/s | Plasma à 400°C pendant 100h | 8 à 15 | 8 à 10 | 12 | 12 |
| | | R = 1125% | | | | | |
| | | zₙ = 80 µm | | | | | |
| Essai 9.1 | Acier 32CrMoV13 (pour pignonnerie) | Taille= S170 | Plasma à 480°C pendant 50h | 1 à 3 | 1 à 2 | 14 | 14 |
| | | Dur.= 48 HRC | | | | | |
| Essai 9.2 | | V = 57 m/s | Nitruration gazeuse à 520°C pendant 50h | 10 | 10 | 18 | 14 |
| | | R= 1875% | | | | | |
| | | zₙ = 90 µm | | | | | |
| Essai 9.3 | Acier X38CrMoV5 (pour outil de forge) | Taille= S170 | Nitruration gazeuse à 520°C pendant 50h | 14 | 10 | 12 | 10 |
| | | Dur.= 58 HRC | | | | | |
| | | V = 57 m/s | | | | | |
| | | R= 3000% | | | | | |
| | | zₙ = 40 µm | | | | | |

**Tableau 7 : traitements de carbonitruration à basse pression après grenaillage**

| Définition de l'essai | Echantillon | Conditions de grenaillage | Conditions de carbonitruration |
|---|---|---|---|
| Essai 10 | Acier 23MnCrMo5 (pour pignonnerie) | Taille = S170 | Carbonitruration à basse pression à 880°C |
| | | Dur.= 48 HRC | |
| | | V= 57 m/s | |
| | | R= 400% | |
| | | zₙ = 40 µm | |

**Tableau 10 : Essai 8, échantillons correspondant à l'essai 1, acier E24, Dureté Rockwell des grenailles = 48HRC**

| Type de grenaille | V (m/s) | R (%) | Znh (µm) | Dureté face traitée (HV) | Dureté face non traitée (HV) | Gain dureté (%) | zₙₕ min. (µm) | Zₙₕ max. (µm) |
|---|---|---|---|---|---|---|---|---|
| | | 100 | 0,00 | 225 | 142 | 58% | | |
| | | 150 | 0,00 | 226 | 133 | 70% | | |
| | | 200 | 27,46* | 234 | 140 | 67% | | |
| | | 300 | 30,28* | 252 | 143 | 76% | | |
| | | 500 | 46,47* | 276 | 132 | 109% | | |
| S170 | 57 | 750 | 50,00* | 281 | 135 | 108% | | |
| | | 1000 | 54,22 | 288 | 140 | 106% | 49,29 | 62,67 |
| | | 1500 | 59,15 | 290 | 140 | 107% | 57,74 | 74,64 |
| | | 3000 | 81,69 | 292 | 131 | 123% | 69,01 | 92,25 |
| | | 6000 | 94,36 | 323 | 135 | 139% | 90,84 | 96,47 |
| | | 10000 | 87,32 | 327 | 127 | 157% | 73,23 | 95,77 |
| | | 100 | 0,00 | 240 | 136 | 76% | | |
| | | 150 | 35,21* | 244 | 136 | 79% | | |
| | | 200 | 34,50* | 253 | 139 | 82% | | |
| | | 300 | 39,43* | 260 | 135 | 93% | | |
| | | 500 | 67,60* | 267 | 129 | 107% | | |
| S330 | 60 | 750 | 69,71 | 284 | 128 | 122% | 61,26 | 90,14 |
| | | 1000 | 76,05 | 297 | 129 | 130% | 69,01 | 96,47 |
| | | 1500 | 111,26 | 299 | 126 | 137% | 102,11 | 121,83 |
| | | 3000 | 111,97 | 309 | 128 | 141% | 97,88 | 123,23 |
| | | 6000 | 123,94 | 310 | 157 | 97% | 109,50 | 139,43 |
| | | 10000 | 97,14 | 310 | 126 | 146% | 90,00 | 113,57 |
| | | 100 | 0,00 | 222 | 135 | 64% | | |
| | | 150 | 0,00 | 225 | 139 | 62% | | |
| | | 200 | 0,00 | 227 | 141 | 61% | | |
| | | 300 | 29,57* | 240 | 144 | 67% | | |
| | | 500 | 44,36* | 248 | 128 | 94% | | |
| S550 | 49 | 750 | 57,74* | 261 | 141 | 85% | | |
| | | 1000 | 98,59 | 271 | 134 | 102% | 76,76 | 161,97 |
| | | 1500 | 108,45 | 289 | 148 | 95% | 81,69 | 133,09 |
| | | 3000 | 97,18 | 295 | 132 | 123% | 83,80 | 146,47 |
| | | 6000 | 115,00 | 309 | 142 | 118% | 85,71 | 140,00 |
| | | 10000 | 119,28 | 325 | 144 | 126% | 98,57 | 150,00 |

## Revendications

1. Procédé de traitement de surface d'une pièce métallique en acier, comportant :
exposer une surface (1) de la pièce métallique à un flux (20) de particules sensiblement sphériques, de manière que toute portion de ladite surface reçoive lesdites particules selon plusieurs incidences primaires, les incidences primaires des particules sur une portion de la surface étant essentiellement distribuées dans un cône ou une pellicule conique qui présente un demi-angle externe au sommet (α, α÷β, α-β) compris entre 10° et 45°, jusqu'à l'obtention d'une couche surfacique (3) de nanostructures,
les particules présentant un diamètre inférieure à 2 mm et supérieur à 0,1 mm et étant projetées à une vitesse comprise entre 40 m/s et 100 m/s, et
exposer la surface (1) de la pièce métallique à des conditions thermochimiques entrainant la diffusion d'un corps dans la structure métallique de la pièce pour modifier la composition chimique de la pièce métallique sur au moins une partie de son épaisseur à partir de la surface (1), les conditions thermochimiques étant des conditions de carbonitruration à basse pression à une température comprise entre 750°C et 1100°C entrainant une recristallisation de la couche surfacique (3) de nonoatructures et une diffusion d'azote dans les joints ℓ de grain de l'acier de la couche surfacique recristallisée, le procédé produisant la formation ℓ de particules de carbonitrures finement dispersées dans la couche surfaciques recristallisée.

2. Procédé selon la revendications 1, dans lequel l'étape d'exposition de la pièce métallique aux conditions thermochimiques comporte :
soumettre la pièce métailique à une montée en température progressive jusqu'à ladite température de carbonitruration et
maintenir la température à ladite température de carbonitruration, la durée cumulée de la montée en température et du maintien en température étant inférieure à trois heures.

3. Procédé selon la revendication 2, dans lequel la durée cumulée est comprise entre 0.5 et 1.5 heure.

4. Procédé selon l'une des revendications 1 à 3, dans lequel la surface (1) est exposée au flux de particules avec un taux de recouvrement compris entre 400 et 1000%.

5. Procédé selon l'une des revendications 1 à 4, dans lequel les grains de l'acier à proximité de la surface (1) de la pièce nitrurée ou carbonitrurée présentent un indice de taille supérieur ou égal à 10 selon NF A 04-102.

6. Procédé selon l'une des revendications 1 à 5, dans lequel les particules sensiblement sphériques présentent un diamètre supérieur à 0,3 mm et inférieur à 1,4 mm.

7. Procédé selon l'une des revendications 1 à 6, dans lequel les incidences des particules sensiblement sphériques sont distribuées sensiblement continûment.

8. Procédé selon l'une des revendications 1 à 7, dans lequel le cône ou la pellicule conique présente un demi-angle externe au sommet compris entre 10° et 30°.

9. Procédé selon l'une des revendications 1 à 8, dans lequel le flux de particules comporte un jet de particules (20) projeté selon une direction centrale (25), la pièce métallique étant fixée sur un support (14) de manière présenter ladite surface orientée ℓ de manière oblique par rapport à ladite direction centrale, le support étant mis en rotation autour d'un axe coaxial avec la direction centrale du jet de particules.

10. Procédé selon la revendications 9, dans lequel l'inclinaison de la surface de la pièce (a) par rapport à la direction centrale est comprise entre 10° et 30°, de préférence voisine de 15°.

11. Procédé selon l'une des revendications 1 à 10, dans lequel les particules sensiblement sphériques sont projetées à une vitesse comprise entre 50 et 80 m/s.

12. Procédé selon l'une des revendications 1 à 11, dans lequel les particules sensiblement sphériques présentent une dureté supérieure à la dureté ℓ de la surface ℓ de la pièce avant traitement.

## Patentansprüche

1. Verfahren zur Oberflächenbehandlung eines metallischen Werkstückes aus Stahl, umfassend:
Aussetzen einer Oberfläche (1) des metallischen Werkstückes einem Strom (20) von im Wesentlichen kugelförmigen Teilchen, so dass jeder Teil der Oberfläche einer Vielzahl von Erstwirkungen durch diese Teilchen ausgesetzt ist, wobei die Erstwirkungen der Teilchen auf jedem Teil der Oberfläche im Wesentlichen in einem Kegel oder einer kegelförmigen Schicht, aufweisend einen äußeren halben Öffnungswinkel (α; α+β, α-β) zwischen 10° und 45° verteilt sind, bis zum Erhalt einer nanostrukturierten Oberflächenschicht (3),
wobei die Teilchen einen Durchmesser von weniger als 2 mm und mehr als 0,1 mm aufweisen und mit einer Geschwindigkeit zwischen 40m/s und 100 m/s projiziert werden, und
Aussetzen der Oberfläche (1) des metallischen Werkstückes thermochemischen Bedingungen,
wodurch die Verteilung eines Körpers in die Metallstruktur des Werkstückes herbeigeführt wird, um die chemische Zusammensetzung des metallischen Werkstückes auf zumindest einem Teil seiner Dicke ausgehend von der Oberfläche zu verändern, wobei die Nitrocarborisierung unter thermochemischen Bedingungen eines niedrigen Drucks und einer Temperatur zwischen 705°C und 1100°C erfolgt, die zu einer Umkristallisation der nanostrukturierten Oberfläche (3) und einer Stickstoffdiffusion in der Korngrenze des Stahls der umkristallisierten Oberfläche führen, wobei durch das Verfahren dünn in der umkristallisierten Oberfläche verteilte Carbonitridteilchen erzeugt werden.

2. Verfahren gemäß Anspruch 1, wobei die Aussetzung des metallischen Werkstückes thermochemischen Bedingungen umfasst:
Unterwerfen des metallischen Werkstückes einer schrittweise ansteigenden Temperatur bis zur Temperatur der Nitrocarborierung, und
Aufrechthalten der Temperatur auf Höhe der Temperatur der Nitrocarborierung, wobei die zusammengerechnete Zeit des Temperaturanstiegs und der Aufrechterhaltung der Temperatur weniger als 3 Stunden beträgt.

3. Verfahren gemäß Anspruch 2, wobei die zusammengerechnete Zeit zwischen 0,5 und 1,5 Stunden beträgt.

4. Verfahren gemäß einem der Ansprüche 1 bis 3, wobei die Oberfläche (1) einem Teilchenstrom mit einer Wiedergewinnungsrate zwischen 400 und 1000% ausgesetzt ist.

5. Verfahren gemäß einem der Ansprüche 1 bis 4, wobei die Korngrenze in der Nähe der Oberfläche (1) des nitrierten oder nitrocarborierten Werkstückes eine Wertgröße größer oder gleich 10 gemäß NF A 04-102 aufweist.

6. Verfahren gemäß einem der Ansprüche 1 bis 5, wobei die im Wesentlichen kugelförmigen Teilchen einen Durchmesser größer als 0,3mm und kleiner als 1,4 mm aufweisen.

7. Verfahren gemäß einem der Ansprüche 1 bis 6, wobei die Einwirkungen der im Wesentlichen kugelförmigen Teilchen kontinuierlich verteilt sind.

8. Verfahren gemäß einem der Ansprüche 1 bis 7, wobei der Kegel oder die kegelförmige Schicht einen äußeren halben Öffnungswinkel zwischen 10° und 30° aufweist.

9. Verfahren gemäß einem der Ansprüche 1 bis 8, wobei der Teilchenstrom einen in eine Zentralrichtung (25) projizierten Teilchenstrahl (20) umfasst, wobei das metallische Werkstück auf einer Unterlage (14) fixiert ist, so dass die Oberfläche in Bezug auf die Zentralrichtung schräg ausgerichtet ist, wobei die Unterlage in Rotation um eine Achse, welche koaxial mit der Zentralrichtung des Teilchenstrahles ist, gesetzt wird.

10. Verfahren gemäß Anspruch 9, wobei die Neigung der Oberfläche des Werkstückes (α) in Bezug auf die Zentralrichtung zwischen 10° und 30° liegt, vorzugsweise in der Nähe von 15°.

11. Verfahren gemäß einem der Ansprüche 1 bis 10, wobei die im Wesentlichen kugelförmigen Teilchen mit einer Geschwindigkeit zwischen 50 und 80 m/s projiziert werden.

12. Verfahren gemäß einem der Ansprüche 1 bis 11, wobei die im Wesentlichen kugelförmigen Teilchen eine größere Härte als die Härte der Oberfläche des Werkstückes vor der Bearbeitung aufweisen.

## Claims

1. Process for the surface treatment of a metal part made of steel, comprising:
exposing a surface (1) of the metal part to a stream (20) of substantially spherical particles, so that any portion of said surface receives said particles along several primary incidences, the primary incidences of the particles on a portion of the surface being essentially distributed in a cone or a conical film which has an outer half apex angle (α, α+β, α-β) between 10° and 45°, until a surface layer (3) of nanostructures is obtained,
the particles having a diameter of less than 2 mm and greater than 0.1 mm and being projected at a speed between 40 m/s and 100 m/s, and
exposing the surface (1) of the metal part to thermochemical conditions that lead to the diffusion of a substance into the metal structure of the part in order to modify the chemical composition of the metal part over at least one part of its thickness starting from the surface (1), the thermochemical conditions being low-pressure carbonitriding conditions at a temperature between 750°C and 1100°C that lead to a recrystallization of the surface layer (3) of nanostructures and a diffusion of nitrogen into the grain boundaries of the steel of the recrystallized surface layer, the process producing the formation of carbonitride particles finely dispersed in the recrystallized surface layer.

2. Process according to Claim 1, in which the step of exposing the metal part to the thermochemical conditions comprises:
subjecting the metal part to a gradual temperature rise up to said carbonitriding temperature and
holding the temperature at said carbonitriding temperature, the combined duration of the temperature rise and of the temperature hold being less than three hours.

3. Process according to Claim 2, in which the combined duration is between 0.5 and 1.5 hours.

4. Process according to one of Claims 1 to 3, in which the surface (1) is exposed to the stream of particles with a degree of coverage of between 400% and 1000%.

5. Process according to one of Claims 1 to 6, in which the grains of the steel in the vicinity of the surface (1) of the nitrided or carbonitrided part have a size index greater than or equal to 10 according to NF A 04-102.

6. Process according to one of Claims 1 to 9, in which the substantially spherical particles have a diameter of greater than 0.3 mm and of less than 1.4 mm.

7. Process according to one of Claims 1 to 6, in which the incidences of the substantially spherical particles are distributed substantially continuously.

8. Process according to one of Claims 1 to 7, in which the cone or the conical film has an outer half apex angle of between 10° and 30°.

9. Process according to one of Claims 1 to 8, in which the stream of particles comprises a jet of particles (20) projected along a central direction (25), the metal part being fixed to a support (14) so as to present said surface oriented obliquely with respect to said central direction, the support being rotated about an axis coaxial with the central direction of the jet of particles.

10. Process according to Claim 9, in which the inclination of the surface of the part (α) with respect to the central direction is between 10° and 30°, preferably close to 15°.

11. Process according to one of Claims 1 to 10, in which the substantially spherical particles are projected at a speed of between 50 and 80 m/s.

12. Process according to one of Claims 1 to 11, in which the substantially spherical particles have a hardness greater than the hardness of the surface of the part before treatment.
